# EUROPEAN PATENT APPLICATION

(11) **EP 1 860 370 A1**
(43) Date of publication of application: **28.11.2007**
(21) Application number: 07737353.8
(22) Date of filing: 23.02.2007
(51) Int. Cl.: F21S 8/04, H01L 33/00, H05B 37/02, F21Y 101/02

(54) **ILLUMINATION DEVICE**

(30) Priority: 23.08.2006 JP 2006227077; 19.09.2006 JP 2006253359
(71) Applicant: MoMo Alliance Co.Ltd., Okayama-shi Okayama 700-0024 (JP)
(72) Inventor: KATO, Masahiro c/o MoMo Alliance Co., Ltd., Okayama 700-0024 (JP); IKEDA, Koji c/o MoMo Alliance Co., Ltd., Okayama 700-0024 (JP); NAKAYAMA, Sadatsugu c/o MoMo Alliance Co., Ltd., Okayama 700-0024 (JP); NAGAMUNE, Sigeru c/o MoMo Alliance Co., Ltd., Okayama 700-0024 (JP); DOI, Kenta c/o MoMo Alliance Co., Ltd., Okayama 700-0024 (JP); KATAOKA, Naoki c/o MoMo Alliance Co., Ltd., Okayama 700-0024 (JP); ITO, Hiroshi c/o MoMo Alliance Co., Ltd., Okayama 700-0024 (JP); KAWAI, Yukitoshi c/o MoMo Alliance Co., Ltd., Okayama 700-0024 (JP)
(74) Representative: Pautex Schneider, Nicole Véronique
(86) International application number: PCT/JP2007/053417
(87) International publication number: WO 2007/094522

(57) **Abstract**

A lighting apparatus (101) according to the present invention includes: a plurality of solid state light emitting devices (131); a holding unit (132) which holds the plurality of solid state light emitting devices (131); a casing (102) inside which the holding unit (132) is disposed; a first terminal (104a) and a second terminal (104b) disposed at a longitudinal end of the casing (102); a third terminal (104c) and a fourth terminal (104d) disposed at the other longitudinal end of the casing (102); a first rectification unit (155) which converts alternating current power, supplied from an external source to the first terminal (104a) and the third terminal (104c), into direct current power, and to supply the direct current power to the plurality of solid state light emitting devices (131); and a second rectification unit (156) which converts alternating current power, supplied from the external source to the second terminal (104b) and the fourth terminal (104d), into direct current power, and to supply the direct current power to the plurality of solid state light emitting devices (131).

## Description

### Technical Field

The present invention relates to a lighting apparatus, and particularly, to a lighting apparatus that uses solid state light emitting devices such as light emitting diodes as a light source.

### Background Art

Conventionally, fluorescent lamps are widely used as lighting apparatuses not only in homes but also in such industrial facilities as factories (for instance, refer to Patent Reference 1). Fluorescent lamps are superior to incandescent bulbs in efficiency, product life and the like. Accordingly, fluorescent lamps are in widespread use.

However, albeit in a small quantity, mercury is used in fluorescent lamps. It has been reported that mercury ingestion during pregnancy has an adverse effect on unborn babies. It has also been reported that mercury ingestion by an ordinary person causes nerve damage.

Accordingly, in step with the increase in environmental consciousness in recent years, the RoHS (Restriction of the use of certain Hazardous Substance in electrical and electronic equipment) Directive has taken effect in Europe, thereby initiating restrictions on mercury use.

In addition, although fluorescent lamps last longer than incandescent bulbs, the life of fluorescent lamps, which is around 6,000 hours, is not necessarily sufficient. As a result, fluorescent lamps the lives of which have expired must be changed every now and then. In particular, industrial facilities such as factories typically have high ceilings on which fluorescent lamps are installed. In other words, the cost of changing the fluorescent lamps is high, and work involved is hazardous. In consideration of such circumstances, lighting apparatuses that use long-life light emitting diodes as light sources have been proposed.

The emission intensity of light emitting diodes drops to 70% or less of its initial level after 40,000 hours or more, indicating that the life of light emitting diodes is significantly longer than that of fluorescent lamps. Another major advantage is that light emitting diodes do not contain mercury.

With lighting apparatuses that use solid state light emitting devices such as light emitting diodes as light sources, it is desirable that the apparatuses can be used without modification by mounting to existing fluorescent lamp brackets.

In this regard, a lighting apparatus has been proposed which uses light emitting diodes as a light source and which is capable of replacing a fluorescent lamp (for instance, refer to Patent Reference 2). The lighting apparatus described in Patent Reference 2 uses a diode OR circuit to ensure that a breakdown does not occur even in the event that left and right are confused when mounting the lighting apparatus to a fluorescent lamp bracket.
Patent Reference 1: Japanese Unexamined Patent Application Publication No. 2004-127631
Patent Reference 2: Japanese Unexamined Patent Application Publication No. 2006-100036

### Disclosure of Invention

### Problems that Invention is to Solve

However, the lighting apparatus described in Patent Reference 2 only addresses the glow lamp lighting system with respect to a fluorescent lamp bracket which drives the lighting apparatus. Since fluorescent lamp brackets of the inverter system are presently the mainstream, the fact that Patent Reference 2 does not specify its support towards fluorescent lamp brackets of the inverter system raises questions on practicality.

The present invention has been conceived in order to solve the above-described problems, and an object thereof is to provide a lighting apparatus that uses solid state light emitting devices as a light source and which can be used in replacement of a conventional fluorescent lamp with not only fluorescent lamp brackets of the glow lamp system but also with fluorescent lamp brackets of the inverter system and the rapid start system. In other words, an object of the present invention is to provide a lighting apparatus that uses solid state light emitting devices and which can be used in replacement of a conventional fluorescent lamp with fluorescent lamp brackets of various systems.

### Means to Solve the Problems

In order to achieve the above described object, a lighting apparatus according to the present invention is a lighting apparatus including: a plurality of solid state light emitting devices; a holding unit which holds the plurality of solid state light emitting devices; a casing inside which the holding unit is disposed; a first terminal and a second terminal disposed at a longitudinal end of the casing; a third terminal and a fourth terminal disposed at the other longitudinal end of the casing; a first rectification unit which converts alternating current power, supplied from an external source, to the first terminal and the third terminal into direct current power, and to supply the direct current power to the plurality of solid state light emitting devices; and a second rectification unit which converts alternating current power, supplied from the external source, to the second terminal and the fourth terminal into direct current power, and to supply the direct current power to the plurality of solid state light emitting devices.

According to this configuration, it is possible to drive the solid state light emitting devices by direct-current power converted by the first rectification unit or the second rectification unit. Furthermore, the first rectification unit and the second rectification unit selectively operate according to which of two terminals among the first terminal, the second terminal, the third terminal, and the fourth terminal alternating current power is supplied to from an external source. Accordingly, remaining two terminals among the first terminal, the second terminal, the third terminal, and the fourth terminal to which alternating current power is not supplied from the external source are unaffected by the externally-supplied alternating current power. Therefore, since a glow lamp or the like does not operate upon lighting of a fluorescent lamp bracket of any of the systems among the glow lamp lighting system, the inverter system and the rapid start system, the lighting apparatus according to the present invention is capable of operating with stability. In other words, the lighting apparatus according to the present invention can be used in replacement of a fluorescent lamp with fluorescent lamp brackets of various systems.

Further, the first rectification unit and the second rectification unit may respectively be provided with full-wave rectification functions.

According to this configuration, the lighting apparatus according to the present invention is capable of efficiently converting alternating current power supplied from commercial power into direct current power.

Furthermore, the first rectification unit may include: a first diode having an anode connected to the first terminal and a cathode connected to an anode of the solid state light emitting devices; a second diode having an anode connected to a cathode of the solid state light emitting devices and a cathode connected to the first terminal; a third diode having an anode connected to the third terminal and a cathode-connected to the anode of the solid state light emitting devices; and a fourth diode having an anode connected to the cathode of the solid state light emitting devices and a cathode connected to the third terminal. Also, the second rectification unit may include: a fifth diode having an anode connected to the second terminal and a cathode connected to the anode of the solid state light emitting devices; a sixth diode having an anode connected to the cathode of the solid state light emitting devices and a cathode connected to the second terminal; a seventh diode having an anode connected to the fourth terminal and a cathode connected to the anode of the solid state light emitting devices; and an eighth diode having an anode connected to the cathode of the solid state light emitting devices and a cathode connected to the fourth terminal.

According to this configuration, even when alternating current power is supplied from the external source to any two terminals among the first terminal, the second terminal, the third terminal, and the fourth terminal, remaining two terminals among the first terminal, the second terminal, the third terminal, and the fourth terminal to which alternating current power is not supplied from the external source are unaffected by the externally-supplied alternating current power. Therefore, since a glow lamp, an inverter circuit or the like does not operate upon lighting of a fluorescent lamp bracket of any of the systems among the glow lamp lighting system, the inverter system and the rapid start system, the lighting apparatus according to the present invention is capable of operating with stability.

Further, the first diode, the second diode, the third diode, the fourth diode, the fifth diode, the sixth diode, the seventh diode, and the eighth diode may be diodes which can operate on a frequency of at least 20 kHz.

According to this configuration, the first rectification unit and the second rectification unit are capable of efficient operation at a frequency equal to or more than 20 kHz generally used in a bracket of the inverter system. Therefore, the lighting apparatus according to the present invention is capable of operating efficiently with a fluorescent lamp bracket of the inverter system.

Furthermore, the lighting apparatus may further include at least one of: a first input circuit which has a resistance component and which is connected between the first terminal and the second terminal; and a second input circuit which has a resistance component and which is connected between the third terminal and the fourth terminal.

According to this configuration, when the lighting apparatus according to the present invention is used with a fluorescent lamp bracket of the inverter system that performs a continuity check, a current flowing through the input unit enables passing of the continuity check. In other words, the lighting apparatus according to the present invention is capable of operating with stability with a fluorescent lamp bracket of the inverter system that performs a continuity check.

Further, the plurality of solid state light emitting devices may be series-connected, and the plurality of solid state light emitting devices may be set such that the summation of forward voltages of the plurality of solid state light emitting devices is approximately equal to the direct current voltage outputted from one of the first rectification unit and the second rectification unit.

According to this configuration, the solid state light emitting devices can emit light without the use of a special power supply circuit. Therefore, the lighting apparatus according to the present invention achieves cost reduction.

In addition, the lighting apparatus may further include an adjustment unit which includes a resistance component and which is connected between the first rectification unit and the second rectification unit, and the plurality of solid state light emitting devices.

According to this configuration, a variation in the electrical characteristics of the solid state light emitting devices can be corrected by the adjustment unit. Therefore, the lighting apparatus according to the present invention achieves stable performance.

Furthermore, the lighting apparatus may further include a protection unit which includes a capacitor element and which is connected in parallel to the plurality of solid state light emitting devices.

According to this configuration, the solid state light emitting devices can be protected from high-voltage pulses by the protection unit. In other words, the lighting apparatus according to the present invention is capable of preventing breakdown caused by external disturbance.

Further, the holding unit may be made of metal.

According to this configuration, the thermal conductivity of the holding unit increases. As a result, heat generated as a loss at the solid state light emitting devices can be efficiently discharged. In addition, improvement in heat discharge effectiveness enables the solid state light emitting devices to maximize their capabilities.

Further, the casing may be made of metal, and formed within the casing may be: a first space area which has a hollow structure in which the holding unit is disposed; a second space area which has a hollow structure; one or more first apertures which are holes extending from the second space area to an exterior of the casing and which function as inlets for air to an interior of the second space area; and one or more second apertures which are holes extending from the second space area to the exterior of the casing and which function as outlets for air from the interior of the second space area.

According to this configuration, the thermal conductivity of the casing increases. As a result, heat generated as a loss at the solid state light emitting devices can be efficiently discharged. In addition, the surface area of the casing can be expanded by forming the second spatial area. Furthermore, air flowing into the second spatial area from the first aperture flows out to the outside from the second aperture. Therefore, the lighting apparatus according to the present invention is capable of efficiently discharging heat generated within the lighting apparatus into the air by utilizing peripheral air convection. As a result, the lighting apparatus according to the present invention achieves an improvement in heat discharge effectiveness.

Furthermore, the second space area is formed, in the casing, on a side opposite to the light emitting direction of the plurality of solid state light emitting devices, with respect to a position at which the holding unit is disposed.

According to this configuration, in a state where the lighting apparatus is installed in the bracket, the second spatial area is formed above the holding unit on which the solid state light emitting devices are arranged. Therefore, the convection generated by the heat enables efficient inflow of air into the second spatial area. As a result, the lighting apparatus according to the present invention achieves an improvement in heat discharge effectiveness.

Furthermore, the second aperture may be formed on a side of the casing opposite to the light emitting direction of the plurality of solid state light emitting devices.

According to this configuration, in a state where the lighting apparatus is installed in the bracket, the second aperture is formed on an upper side. This enables efficient outflow of air heated in the second spatial area from the second aperture to the outside. As a result, the lighting apparatus according to the present invention achieves an improvement in heat discharge effectiveness.

Further, the first aperture may be formed on a lateral surface of the casing with respect to the light emitting direction of the plurality of solid state light emitting devices.

According to this configuration, in a state where the lighting apparatus is installed in the bracket, the first aperture is formed on the lateral surface. Therefore, the convection generated by the heat can be utilized to enable efficient inflow of air to the second spatial area. As a result, the lighting apparatus according to the present invention achieves an improvement in heat discharge effectiveness.

Furthermore, the shape of a surface of the second space area on a side opposite to the light emitting direction of the plurality of solid state light emitting devices may be a streamlined shape.

According to this configuration, since air flows smoothly in the second spatial area, heat discharge from the casing into the air can be efficiently performed. As a result, the lighting apparatus according to the present invention achieves an improvement in heat discharge effectiveness.

Moreover, a distance between the first aperture and the solid state light emitting devices may be shorter than a distance between the second aperture and the solid state light emitting devices.

According to this configuration, the distance between the solid state light emitting devices and the first aperture is shortened. This enables discharge of heat generated from the solid state light emitting devices into the air in a concentrated manner from the proximity of the solid state light emitting devices. As a result, the lighting apparatus according to the present invention achieves an improvement in heat discharge effectiveness.

Further, an angle formed between a direction of the first aperture from a the-second-space-area side to an outer surface side of the casing and a direction of the second aperture from the outer surface side of the casing to the the-second-space-area side may range from 0 to 90 degrees.

According to this configuration, heated air in the periphery of the lighting apparatus is able to efficiently flow into the second spatial area. In addition, air flown into the second spatial area can efficiently flow out to the outside. As a result, the lighting apparatus according to the present invention achieves an improvement in heat discharge effectiveness.

Furthermore, the casing may include a translucent part which has translucency and which is formed in the light emitting direction of the plurality of solid state light emitting devices.

According to this configuration, the solid state light emitting devices can be protected by the translucent part.

In addition, the translucent part may have concavities and convexities formed on one of an outer surface and an inner surface.

According to this configuration, light emitted by the solid state light emitting devices is diffused by concavities and convexities formed on the outer surface or the inner surface of the translucent part. As a result, the lighting apparatus according to the present invention is capable of reducing the directionality of light emitted by the solid state light emitting devices, and is capable of illuminating a wide area.

Moreover, the convexities may respectively be formed on the light emitting optical axes of the plurality of solid state light emitting devices.

According to this configuration, light on a light emitting optical axis of the solid state light emitting devices with a large quantity of light is diffused by convexities formed on the outer surface or the inner surface of the translucent part. Therefore, the lighting apparatus according to the present invention is capable of reducing the directionality of light emitted by the solid state light emitting devices, and is capable of illuminating a wide area.

Further, an additive for diffusing light outputted from the plurality of solid state light emitting devices may be added to the translucent part.

According to this configuration, light emitted by the solid state light emitting devices is diffused by the additive. As a result, the lighting apparatus according to the present invention is capable of reducing the directionality of light emitted by the solid state light emitting devices, and is capable of illuminating a wide area.

Furthermore, the lighting apparatus may further include a diffusion sheet which is formed on one of an outer surface and an inner surface of the translucent part and which diffuses light emitted by the plurality of solid state light emitting devices.

According to this configuration, light emitted by the solid state light emitting devices is diffused by the diffusion sheet. As a result, the lighting apparatus according to the present invention is capable of reducing the directionality of light emitted by the solid state light emitting devices, and is capable of illuminating a wide area.

In addition, the lighting apparatus may further include a joining unit which has adhesiveness and which is located between the casing and the holding unit, in which the casing and the holding unit are brought into close contact with each other by the joining unit.

According to this configuration, because the joining unit brings the casing and the holding unit into close contact, heat generated from the solid state light emitting devices can be efficiently transferred to the casing via the holding unit.

Further, the joining unit may be double-faced tape which does not contain a backing material.

According to this configuration, effects of the backing material (decrease in thermal conductivity and the like) can be eliminated.

Furthermore, the plurality of solid state light emitting devices may emit light having one of a daylight color, a daylight-white color, a white color, a warm white color, and a light bulb color specified in 4.2 "Chromaticity range" in JISZ9112 "Classification of fluorescent lamps by chromaticity and colour rendering property".

According to this configuration, the lighting apparatus according to the present invention can be used as a lighting fixture that radiates light of a natural chromaticity.

Furthermore, the plurality of solid state light emitting devices may emit light having a peak wavelength of 380 to 500 nm.

According to this configuration, the lighting apparatus according to the present invention can be used as a security light. Note that the blue color is said to have a calming effect on mental excitation.

Moreover, the plurality of solid state light emitting devices may be light emitting diodes.

According to this configuration, the fighting apparatus according to the present invention has a long life and is capable of improving effects on the environment. Note that light emitting diodes have long lives and do not contain mercury.

In addition, the lighting apparatus may have dimensions same as dimensions of any of the double-capped fluorescent lamps specified in 2.3.1 "List of Data Sheets" of JISC7617-2 "Double-capped fluorescent lamps - Part 2: Performance specifications".

According to this configuration, the lighting apparatus according to the present invention can be mounted on an ordinary fluorescent lamp bracket. As a result, since a special bracket is not required, the lighting apparatus according to the present invention is capable of improving practicability.

### Effects of the Invention

As described above, the present invention is capable of providing a lighting apparatus that uses a solid state light emitting device and which can be used in replacement of a conventional fluorescent lamp with fluorescent lamp brackets of various systems.

### Brief Description of Drawings

FIG. 1 is a perspective view showing the exterior of a lighting apparatus 101 according to a first embodiment of the present invention.
FIG. 2 is a plan view taken from a lateral surface of the lighting apparatus 101 according to the first embodiment of the present invention.
FIG. 3 is a plan view taken from an upper side of the lighting apparatus 101 according to the first embodiment of the present invention.
FIG. 4 is a cross sectional diagram of the lighting apparatus 101 according to the first embodiment of the present invention.
FIG. 5 is a diagram showing the lighting apparatus 101 according to the first embodiment of the present invention mounted on a bracket 141 of a double-capped fluorescent lamp.
FIG. 6 is a diagram showing a circuit configuration of the lighting apparatus 101 according to the first embodiment of the present invention.
FIG. 7 is a diagram showing a circuit configuration example of a state in which the lighting apparatus 101 according to the first embodiment of the present invention is mounted on the bracket 141.
FIG. 8 is a diagram showing a circuit configuration example of a state in which the lighting apparatus 101 according to the first embodiment of the present invention is mounted on the bracket 141.
FIG. 9 is a diagram schematically showing a measurement state of the performance of a fluorescent lamp.
FIG. 10 is a diagram schematically showing a measurement state of the performance of the lighting apparatus 101 according to the first embodiment of the present invention.
FIG. 11 is a perspective view showing the exterior of a lighting apparatus 201 according to a second embodiment of the present invention.
FIG. 12 is a plan view taken from a lateral surface of the lighting apparatus 201 according to the second embodiment of the present invention.
FIG. 13 is a plan view taken from an upper side of the lighting apparatus 201 according to the second embodiment of the present invention.
FIG. 14 is a cross sectional diagram of the lighting apparatus 201 according to the second embodiment of the present invention.
FIG. 15 is a diagram showing a state in which the lighting apparatus 201 according to the second embodiment of the present invention is mounted on a bracket 141 of a double-capped fluorescent lamp.
FIG. 16 is a cross sectional diagram of the lighting apparatus 201 according to the second embodiment of the present invention in a state of being mounted on the bracket 141 of a double-capped fluorescent lamp.
FIG. 17 is a diagram showing airflow in the lighting apparatus 201 according to the second embodiment of the present invention.
FIG. 18 is a plan view taken from a lateral surface of a lighting apparatus 501 provided with a heat radiating fin.
FIG. 19 is a cross sectional diagram of the lighting apparatus 501 provided with a heat radiating fin.
FIG. 20 is a diagram showing the exterior and a cross sectional structure of a lighting apparatus 301 that is a modification of the lighting apparatus 201 according to the second embodiment of the present invention.
FIG. 21 is a cross sectional diagram of the lighting apparatus 301 that is the modification of the lighting apparatus 201 according to the second embodiment of the present invention.

### Numerical References

- ] 101, 201, 301, 501: Lighting apparatus
- 102, 202: Casing
- 103: Terminal unit
- 104, 104a, 104b, 103c, 104d: Terminal pin
- 131: Solid state light emitting device
- 132: Board
- 133, 333: Protective translucent plate
- 134: Input circuit
- 135: Direct current conversion circuit
- 136: Adjustment circuit
- 137: Protection circuit
- 141: Bracket
- 157, 158: Terminal
- 155, 156: Diode bridge circuit
- 161: Plug
- 162: Switch
- 163: Ballast
- 164: Glow lamp
- 181: Fluorescent lamp
- 203: Inflow port
- 211: Outflow port
- 231: Hollow area
- 241: Exterior surface
- 242: Interior surface
- 502: Heat radiating fin
- D1, D2, D3, D4, D5, D6, D7, D8: Diode

### Best Mode for Carrying Out the Invention

Embodiments of a lighting apparatus according to the present invention are described in detail below with reference to the drawings.

### (First Embodiment)

In a lighting apparatus according to a first embodiment of the present invention, due to two diode bridge circuits included therein, terminal pairs to which alternating current power is not provided from an external source are not affected by externally-provided alternating current power. As a result, the lighting apparatus according to the first embodiment of the present invention can be used in replacement of a conventional fluorescent lamp with fluorescent lamp brackets of various systems.

First, a configuration of the lighting apparatus according to the first embodiment of the present invention is described.

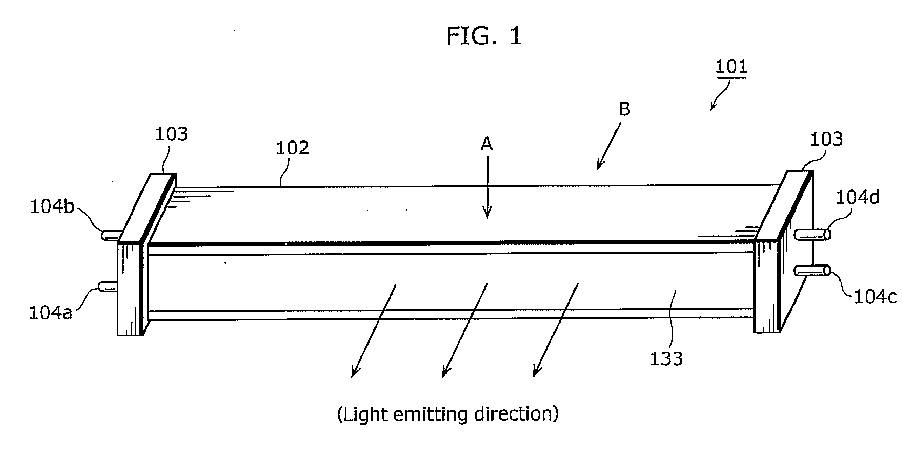

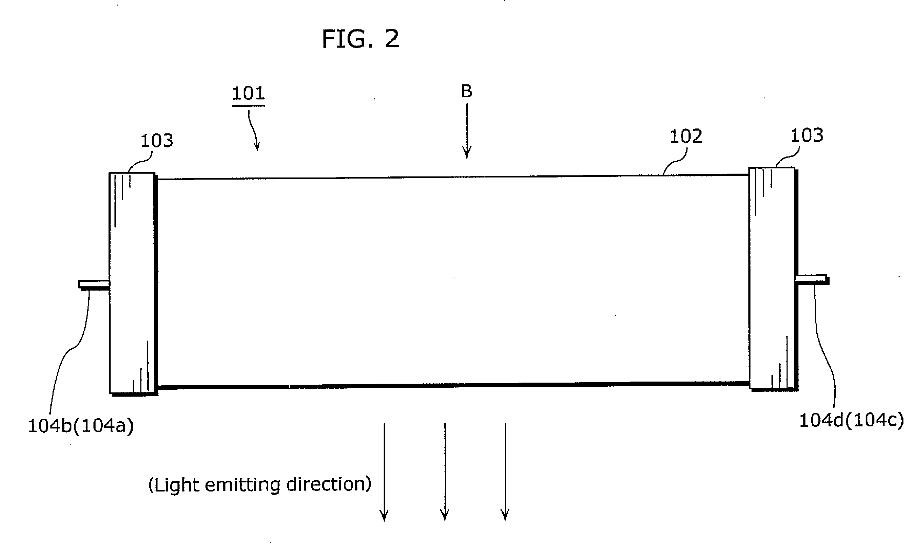

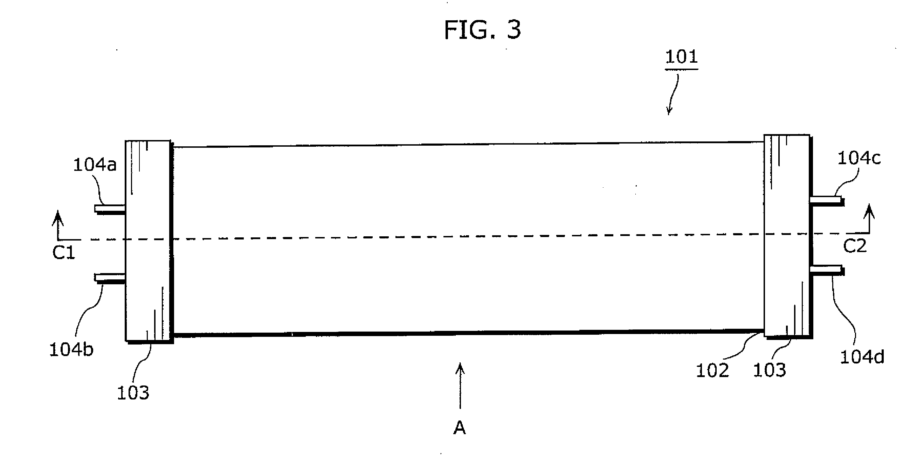

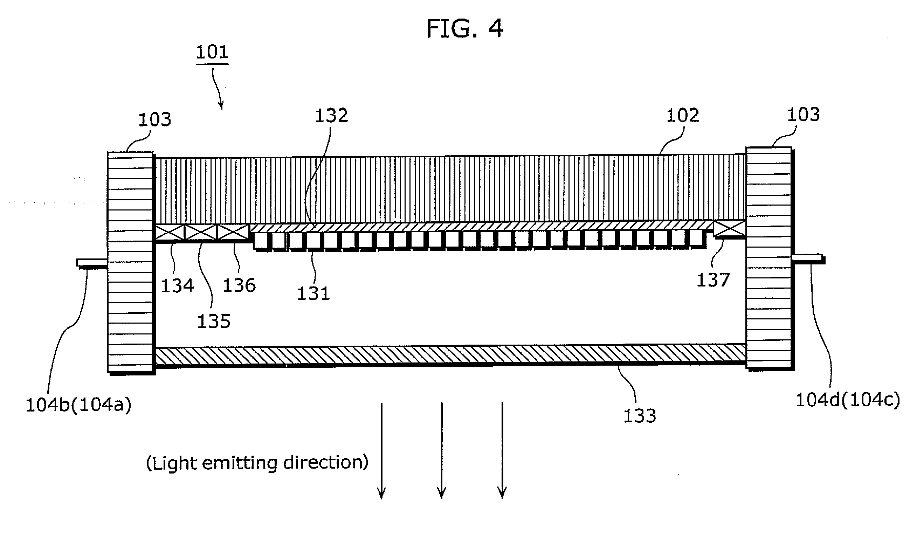

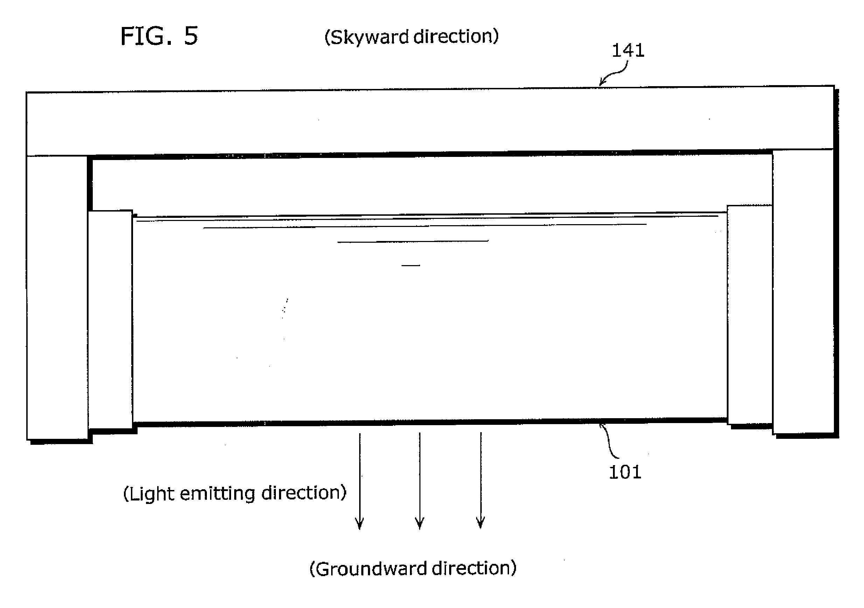

FIG. 1 is a perspective view showing the exterior of a lighting apparatus 101 according to the first embodiment of the present invention. FIG. 2 is a plan view taken from a lateral surface (the direction A shown in FIG. 1) of the lighting apparatus 101 according to the first embodiment of the present invention. FIG. 3 is a plan view taken from an upper side (the direction B shown in FIG. 1) of the lighting apparatus 101 according to the first embodiment of the present invention. FIG. 4 is a cross sectional diagram showing a structure of the lighting apparatus 101 taken along the C1-C2 plane shown in FIG. 3. FIG. 5 is a diagram showing a state in which the lighting apparatus 101 is mounted on a bracket 141 of a double-capped fluorescent lamp.

As shown in FIGS. 1, 2, and 3, the lighting apparatus 101 includes a casing 102, terminal units 103, terminal pins 104a, 104b, 104c, 104d, and a protective translucent plate 133. Moreover, when no particular distinction is made among the terminal pins 104a, 104b, 104c, and 104d, the terminal pins are denoted as the terminal pins 104.

As shown in FIG. 4 the lighting apparatus 101 further includes inside the casing 102 a plurality of solid state light emitting devices 131, a board 132, an input circuit 134, a direct current conversion circuit 135, an adjustment circuit 136, and a protection circuit 137.

The dimensions of the lighting apparatus 101 are the same as that of a general double-capped fluorescent lamp. For example, the lighting apparatus 101 has the same dimensions as any of the double-capped fluorescent lamps as specified in 2.3.1 "List of Data Sheets" of JISC7617-2 "Double-capped fluorescent lamps - Part 2: Performance specifications."

The casing 102 is formed such that its cross section is approximately a U-shape. The casing 102 is made of a metal with a high thermal conductivity (preferably, a metal with a thermal conductivity equal to or more than 200 W.m⁻¹·K⁻¹). For instance, the casing 102 is made of aluminum. The use of aluminum for the casing 102 is due to the fact that aluminum: is inexpensive; is easy to be formed; has excellent recyclability; has a thermal conductivity equal to or more than 200 W·m⁻¹·K⁻¹; has high heat discharge characteristics, and the like.

In addition, after making the casing 102 from aluminum, it is desirable that the casing 102 undergoes alumite treatment. Alumite treatment increases surface area and enhances heat discharge effectiveness.

The protective translucent plate 133 is translucent, and is placed in a light emitting direction of the solid state light emitting devices 131. The protective translucent plate 133 is formed in a plate-like shape. The casing 102 and the protective translucent plate 133 are integrally combined to form an approximately quadrangular cross section.

The protective translucent plate 133 is made of transparent glass, acrylic resin, polycarbonate or the like. The outer surface or the inner surface of the protective translucent plate 133 is surface treated so that minute concavities and convexities are unevenly formed thereon. This surface treatment can be easily performed by applying, for instance, sandblasting. The protective translucent plate 133 protects the solid state light emitting devices 131 and the like that are disposed inside the lighting apparatus 101. The protective translucent plate 133 also functions to diffuse light emitted by the solid state light emitting devices 131. Light emitted by the solid state light emitting devices 131 is highly directional and tends to be radiated locally. By having the surface-treated protective translucent plate 133 diffuse light emitted by the solid state light emitting devices 131, the directionality of the light is reduced and the light can uniformly illuminate a wide area.

The terminal units 103 are formed on both longitudinal ends of the casing 102.

The terminal pins 104 are formed at the terminal units 103. The terminal pins 104 have the same mechanism and dimensions as that of a terminal pin used in an ordinary double-capped fluorescent lamp. From an external source, the terminal pins 104 introduce power to the inside of the lighting apparatus 101. In addition, the terminal pins 104 function as a base when securing the lighting apparatus 101 to the bracket 141 such as that shown in FIG. 5. In other words, as shown in FIG. 5, the lighting apparatus 101 can be used by mounting, without modification, to the bracket 141 of an ordinary double-capped fluorescent lamp.

The terminal pin 104a and the terminal pin 104b are formed on one longitudinal end of the casing 102. The terminal pins 104c and 104d are formed on the other longitudinal end of the casing 102.

The board 132 is placed inside a hollow structure formed by the casing 102 and the protective translucent plate 133. The board 132 is formed on a surface opposing the protective translucent plate 133 inside the hollow structure. The board 132 is made of a metal with a high thermal conductivity (preferably, a metal with a thermal conductivity equal to or more than 200 W.m⁻¹.K⁻¹). It is preferable that the board 132 is made of the same material as the casing 102. For instance, the board 132 is made of aluminum.

A plurality of solid state light emitting devices 131 are arranged on the board 132. The plurality of solid state light emitting devices 131 is, for instance, light emitting diodes. The solid state light emitting devices 131 are so-called high power light emitting diodes having a per-unit power consumption equal to or more than 1 W, and are surface-mounted light emitting diodes. High power light emitting diodes have a high luminous intensity and are suitable for use in lighting apparatuses. When using the lighting apparatus 101 as an ordinary lighting fixture, suitable luminescent colors of the solid state light emitting devices 131 to be used include daylight color, daylight-white color, white color, warm white color, and light bulb color. More specifically, for instance, the plurality of solid state light emitting devices 131 emit light having a daylight color, a daylight-white color, a white color, a warm white color, or a light bulb color as specified in 4.2 "Chromaticity range" in JISZ9112 "Classification of fluorescent lamps by chromaticity and colour rendering property."

In addition, the plurality of solid state light emitting devices 131 may alternatively emit blue color light that is light having a peak wavelength of 380 to 500 nm. The color blue is said to have a calming effect on mental excitation. For this reason, the lighting apparatus 101 emitting a blue color light is suitable as a security lamp.

Furthermore, the plurality of solid state light emitting devices 131 is series-connected. In this case, the number of solid state light emitting devices 131 used is selected such that the summation (ΣVf) of forward voltages (Vf) of the respective solid state light emitting devices 131 is approximately equal to the voltage (V) supplied from the direct current conversion circuit 135. An experiment was carried out by the present inventors under the conditions that a voltage (V) supplied from the direct current conversion circuit 135 is 100 V and that the forward voltage (Vf) of each of the solid state light emitting devices 131 is 3.8 V. Therefore, in the present embodiment, the number of solid state light emitting devices 131 is 26. This arrangement enables the voltage (V) supplied from the direct current conversion circuit 135 to achieve a balance with the summation (ΣVf) of forward voltages of the respective solid state light emitting devices 131, thereby eliminating the need to separately provide a direct current power source and the like. As a result, the cost of the lighting apparatus 101 can be reduced.

Alternatively, in order to further increase the luminous intensity of the lighting apparatus 101, a plurality of rows of the solid state light emitting devices 131 series-connected as described above may be provided and the rows of the series-connected solid state light emitting devices 131 may be connected to each other in parallel. In consideration of the above, the present inventors have provided two rows of series-connected solid state light emitting devices 131 and have connected these rows of the series-connected solid state light emitting devices 131 in parallel.

The input circuit 134 includes a fixed resistor or the like. Moreover, the input circuit 134 needs only include a resistance component, and may be, for instance, a thermistor. It is desirable that the input circuit 134 has a resistance value of around 1 kΩ to 100 kΩ.

Furthermore, among fluorescent lamp brackets of the inverter system, there are those which check the continuity between the terminal pin 104a and the terminal pin 104b. A heater is provided between the terminal pin 104a and the terminal pin 104b of the fluorescent lamp. The fluorescent lamp bracket of the inverter system performs a continuity check in order to verify whether or not the heater is functioning properly. When the continuity check is not passed, the fluorescent lamp bracket of the inverter system performs processing such as stopping the power supply to the fluorescent lamp.

The input circuit 134 is provided to accommodate this continuity check. By providing the input circuit 134, the continuity check performed by the fluorescent lamp bracket of the inverter system can be passed. As a result, the lighting apparatus 101 can also be lighted with a bracket of a fluorescent lamp of a type that checks continuity. In other words, the lighting apparatus 101 according to the first embodiment of the present invention can now be used with a bracket of a fluorescent lamp of a type that checks continuity. Alternatively, the input circuit 134 may either be provided between the terminal pin 104c and the terminal pin 104d, or between both the terminal pin 104a and the terminal pin 104b as well as the terminal pin 104c and the terminal pin 104d.

The direct current conversion circuit 135 performs full-wave rectification on alternating current power supplied from the terminal pins 104 for conversion into direct current power. Alternating current power must be converted into direct current power because the solid state light emitting devices 131 are direct current-driven devices.

The adjustment circuit 136 includes a variable resistive element (not shown). The adjustment circuit 136 is a circuit for absorbing variations in forward voltages (Vf) among the solid state light emitting devices 131. More specifically, unavoidable variations occur in the forward voltages (Vf) among the solid state light emitting devices 131 during manufacturing and the like of the solid state light emitting devices 131. This results in fluctuations in the summation (ΣVf) of the forward voltages (Vf) of the solid state light emitting devices 131. In turn, the balance between the summation (ΣVf) and the voltage (V) supplied from the direct current conversion circuit 135 is disrupted. Correction is performed by the adjustment circuit 136 to avoid such disruptions.

The protection circuit 137 is a protection circuit provided against the application of instantaneous high voltage from outside of the lighting apparatus 101 due to unexpected disturbances. The protection circuit 137 includes a circuit that includes a capacitor element (not shown). The protection circuit 137 is provided for the purpose of protecting the solid state light emitting devices 131.

Note that, for applications as a lighting apparatus, it is preferable that high-power devices are used as the solid state light emitting devices 131. Accordingly, high power light emitting diodes are used as described above. High power light emitting diodes have high power consumption, and accordingly, a significant amount of energy is released as heat. Accumulation of this heat in the vicinity of the light emitting diodes leads to a decline in luminous intensity, deterioration of life characteristics and the like of the light emitting diodes. Therefore, it is imperative that this heat is appropriately treated.

In consideration of the above, surface-mount light emitting diodes are used. Each of the surface-mount light emitting diodes has a large electrode area, and as a result, the area that comes into contact with the board 132 is larger. Therefore, heat generated from the light emitting diode can be efficiently diffused to the board 132. However, unless the board 132 is made of a material with good thermal conductivity, heat still accumulates in the vicinity of the light emitting diode. Accordingly, with the lighting apparatus 101, aluminum is adopted as the material of the board 132. The casing 102 is also made of aluminum. Since aluminum has good thermal conductivity, heat generated from the light emitting diode is efficiently discharged into the air from the casing 102 via the board 132.

In this case, it is essential that the casing 102 and the board 132 are in contact with each other. This is because penetration of air between the casing 102 and the board 132 inhibits heat transfer from the casing 102 to the board 132, and the inhibition of heat transfer in turn hinders efficient heat treatment. In other words, it is preferable that the adhesion between the casing 102 and the board 132 is improved by constituting the casing 102 and the board 132 from the same material. It is also preferable that the adhesion between the casing 102 and the board 132 is further improved by performing press working.

When performing the above-mentioned press working, it is preferable that adherent material (for example, an adhesive, backing material-free double-faced tape, or the like) (not shown) is inserted between the casing 102 and the board 132 in order to further improve the adhesion therebetween.

Moreover, when using double-faced tape, it is essential that a tape that does not include a backing material is selected. This is because the backing material has a low thermal conductivity, and thus heat transfer from the casing 102 to the board 132 is inhibited.

It is also preferable that the board 132 is partitioned into a plurality of parts. This partitioning aims to prevent deterioration of the adhesion between the casing 102 and the board 32 which is caused by rises in the temperature of the lighting apparatus 101 in a case where the linear expansion coefficients of the casing 102 and the board 132 differ from each other. The partitioning of the board 132 shortens the per-piece longitudinal length of the board 132. Therefore, the per-piece amount of expansion of the board 132 is reduced. As a result, it is now easier for an adherent material to absorb the difference in expansion between the casing 102 and the board 132, and adhesion between the casing 102 and the board 132 is more easily maintained. This method of partitioning the board 132 is particularly effective when the longitudinal length of the lighting apparatus 101 is long.

Moreover, in the above description, while an example has been described in which the casing 102 and the protective translucent plate 133 are integrally combined to form an approximately quadrangular cross section of the lighting apparatus 101, the cross sectional shape of the lighting apparatus 101 is not limited to this example. For instance, the casing 102 and the protective translucent plate 133 may respectively have an approximately half pipe shape, in which case the casing 102 and the protective translucent plate 133 may be integrally combined to form a tubular cross section of the lighting apparatus 101.

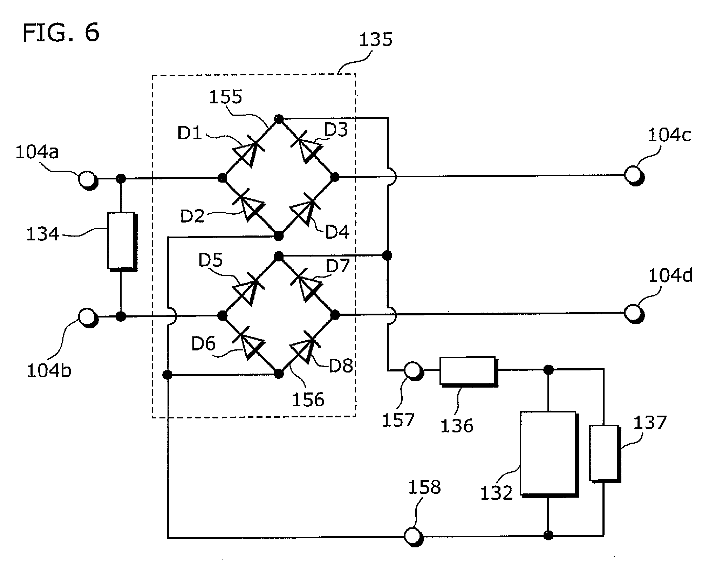

FIG. 6 is a diagram showing a circuit configuration of the lighting apparatus 101.

The input circuit 134 is connected between the terminal pin 104a and the terminal pin 104b. Moreover, the input circuit 134 may alternatively be connected between the terminal pin 104c and the terminal pin 104d. Additionally, two input circuits may be formed, with one input circuit connected between the terminal pin 104a and the terminal pin 104b and the other input circuit connected between the terminal pin 104c and the terminal pin 104d.

The direct current conversion circuit 135 is provided with diode bridge circuits 155 and 156. The diode bridge circuits 155 and 156 convert alternating current power into direct current power. The diode bridge circuits 155 and 156 are so-called full-wave rectifying circuits that are provided with full-wave rectifying functions.

The diode bridge circuit 155 is connected between the terminal pin 104a and the terminal pin 104c. In other words, the terminal pin 104a and the terminal pin 104b are connected to input terminals of the diode bridge circuit 155. The diode bridge circuit 155 converts alternating current power, supplied from an external source, to the terminal pins 104a and 104c into direct current power, and supplies the direct current power to the plurality of solid state light emitting devices 131.

The diode bridge circuit 156 is connected between the terminal pin 104b and the terminal pin 104d. In other words, the terminal pin 104b and the terminal pin 104d are connected to input terminals of the diode bridge circuit 155. The diode bridge circuit 156 converts alternating current power, supplied from the external source, to the terminal pin 104b and the terminal pin 104d into direct current power, and supplies the direct current power to the plurality of solid state light emitting devices 131.

The terminal 157 and the terminal 158 are output terminals of the direct current conversion circuit 135, and the outputs of the diode bridge circuits 155 and 156 are connected in parallel thereto.

The diode bridge circuit 155 includes diodes D1, D2, D3, and D4. The anode of the diode D1 is connected to the terminal pin 104a while the cathode thereof is connected to the terminal 157. The anode of the diode D2 is connected to the terminal 158 while the cathode thereof is connected to the terminal pin 104a. The anode of the diode D3 is connected to the terminal pin 104c while the cathode thereof is connected to the terminal 157. The anode of the diode D4 is connected to the terminal 158 while the cathode thereof is connected to the terminal pin 104c.

The diode bridge circuit 155 includes diodes D5, D6, D7, and D8. The anode of the diode D5 is connected to the terminal pin 104b while the cathode thereof is connected to the terminal 157. The anode of the diode D6 is connected to the terminal 158 while the cathode thereof is connected to the terminal pin 104b. The anode of the diode D7 is connected to the terminal pin 104d while the cathode thereof is connected to the terminal 157. The anode of the diode D8 is connected to the terminal 158 while the cathode thereof is connected to the terminal pin 104d.

There are 26 solid state light emitting devices 131 (not shown) which are serially mounted on the board 132. The anodes of the series-connected solid state light emitting devices 131 are connected to the terminal 157 via the adjustment circuit 136. The cathodes of the series-connected solid state light emitting devices 131 are connected to the terminal 158.

The adjustment circuit 136 is connected between the terminal 157 and the anodes of the series-connected solid state light emitting devices 131.

The protection circuit 137 is connected in parallel between the anodes and the cathodes of the series-connected solid state light emitting devices 131.

Moreover, the connection between the terminal 157 and the terminal 158, and the board 132, may be either a direct connection, or a connection having the adjustment circuit 136 or the like inbetween. In other words, the outputs of the diode bridge circuits 155 and 156 and the board 132 may either be directly connected, or connected via a resistor and a switch or the like.

Next, operations of the lighting apparatus 101 are described.

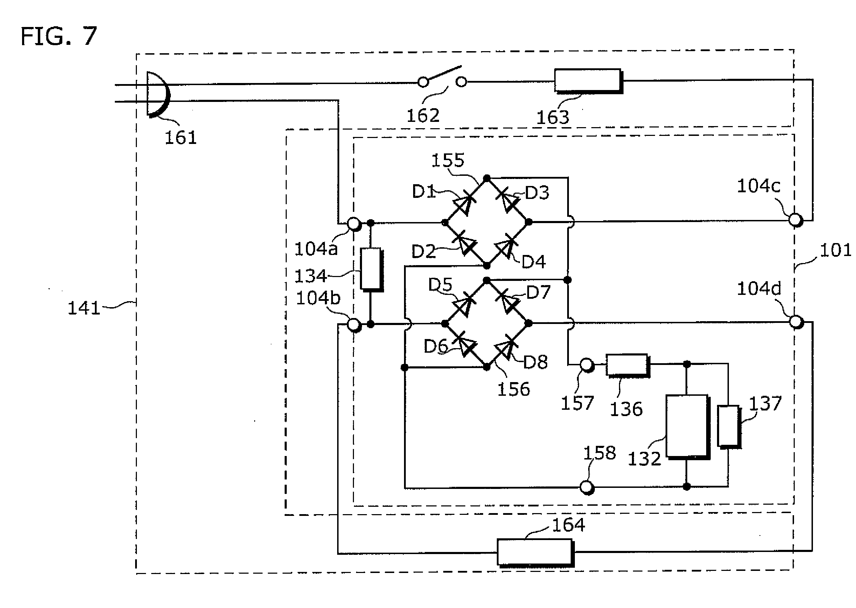

FIG. 7 is a diagram showing an example of a circuit configuration in a state where the lighting apparatus 101 is mounted to the bracket 141 as shown in FIG. 5.

The bracket 141 includes a plug 161, a switch 162, a ballast 163, and a glow lamp 164. The bracket 41 supplies alternating current power to the lighting apparatus 101 via the terminal pin 104a and the terminal pin 104c.

The plug 161 is, for example, a plug to which commercial power is supplied. The switch 162 is series-connected between the plug 161 and the ballast 163.

The ballast 163 generates high voltage pulses due to the operation of the glow lamp 164. The ballast 163 is series-connected between the switch 162 and the terminal pin 104c.

The glow lamp 164 is connected between the terminal pin 104b and the terminal pin 104d.

When the switch 162 is turned on in a state where commercial power is supplied to the plug 161, alternating current power is applied between the terminal pins 104a and 104c via the ballast 163.

First, a description is given on operations performed when a positive voltage is applied to the terminal pin 104a and a negative voltage is applied to the terminal pin 104c. When a positive voltage is applied to the terminal pin 104a and a negative voltage is applied to the terminal pin 104c, electrical current flows in sequence through the terminal 104a, the diode D1, the terminal 157, the adjustment circuit 136, the board 132, the terminal 158, and the diode D4 before flowing into the terminal pin 104c. In this case, the diode bridge circuit 156 prevents current from flowing through a route that includes the terminal pin 104b, the glow lamp 164, and the terminal pin 104d. As a result, the glow lamp 164 does not operate.

When using an ordinary fluorescent lamp, the operation of the glow lamp 164 causes the ballast 163 to generate high voltage pulses. On the other hand, when using the lighting apparatus 101 according to the first embodiment of the present invention, since the glow lamp 164 does not operate, the ballast 163 does not generate high voltage pulses. When high voltage pulses are generated by the ballast 163, such pulses impair the solid state light emitting devices 131. When using the lighting apparatus 101 according to the first embodiment of the present invention, since the ballast 163 does not generate high voltage pulses, the solid state light emitting devices 131 can be driven with stability.

Next, a description is given on operations performed when a negative voltage is applied to the terminal pin 104a and a positive voltage is applied to the terminal pin 104c. When a negative voltage is applied to the terminal pin 104a and a positive voltage is applied to the terminal pin 104c, electrical current flows in sequence through the terminal 104c, the diode D3, the terminal 157, the adjustment circuit 136, the board 132, the terminal 158, and the diode D2 before flowing into the terminal pin 104a. In this case, the diode bridge circuit 156 prevents current from flowing through a route that includes the terminal pin 104b, the glow lamp 164, and the terminal pin 104d. As a result, the glow lamp 164 does not operate.

As described above, when the lighting apparatus 101 is mounted to the bracket 141 as shown in FIG. 7, since the glow lamp 164 does not operate, the lighting apparatus 101 is capable of operating with stability. Moreover, the lighting apparatus 101 is capable of operating stably in the same manner as described above even when the plug 161, the switch 162, and the ballast 163 are connected between the terminal pin 104b and the terminal pin 104d while the glow lamp 164 is connected between the terminal pin 104a and the terminal pin 104c.

Next, a description is given on a case in which alternating current power is applied between the terminal pin 104a and the terminal pin 104d in a state where the lighting apparatus 101 is mounted to the bracket 141.

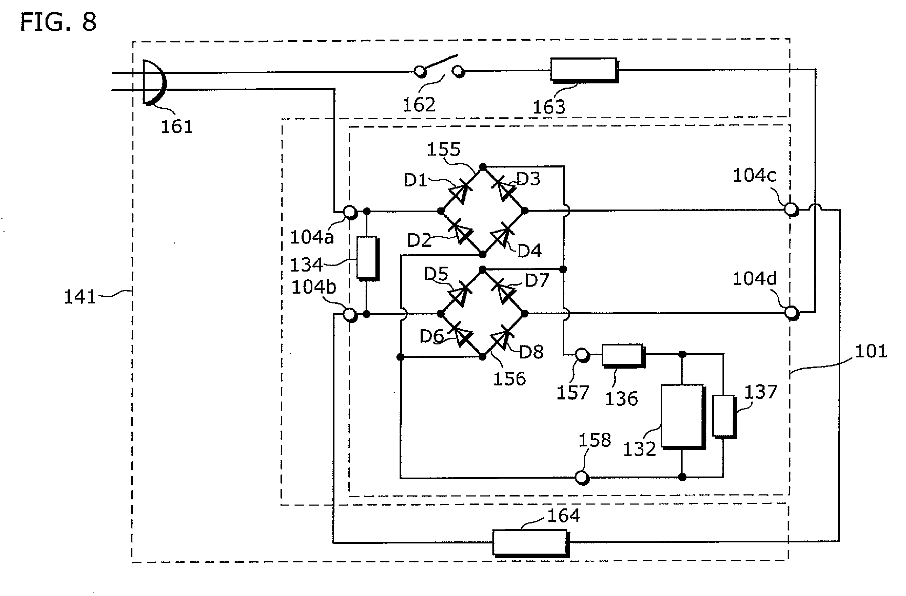

FIG. 8 is a diagram showing an example of circuit configuration in a state where the lighting apparatus 101 is mounted to the bracket 141. Note that elements which are the same as those shown in FIG. 7 have the same numeral references.

The bracket 141 supplies alternating current power to the lighting apparatus 101 via the terminal pin 104a and the terminal pin 104d.

When the switch 162 is turned on in a state where commercial power is supplied to the plug 161, alternating current power is applied between the terminal pins 104a and 104d via the ballast 163.

First, a description is given on operations performed when a positive voltage is applied to the terminal pin 104a and a negative voltage is applied to the terminal pin 104d. When a positive voltage is applied to the terminal pin 104a and a negative voltage is applied to the terminal pin 104d, electrical current flows in sequence through the terminal 104a, the diode D1, the terminal 157, the adjustment circuit 136, the board 132, the terminal 158, and the diode D8 before flowing into the terminal pin 104d. In this case, the diode bridge circuits 155 and 156 prevent current from flowing through a route that includes the terminal pin 104c, the glow lamp 164, and the terminal pin 104b. As a result, the glow lamp 164 does not operate.

Next, a description is given on operations performed when a negative voltage is applied to the terminal pin 104a and a positive voltage is applied to the terminal pin 104d. When a negative voltage is applied to the terminal pin 104a and a positive voltage is applied to the terminal pin 104d, electrical current flows in sequence through the terminal 104d, the diode D7, the terminal 157, the adjustment circuit 136, the board 132, the terminal 158, and the diode D2 before flowing into the terminal pin 104a. In this case, the diode bridge circuits 155 and 156 prevent current from flowing through a route that includes the terminal pin 104b, the glow lamp 164, and the terminal pin 104c. As a result, the glow lamp 164 does not operate. Therefore, the solid state light emitting devices 131 can operate with stability.

As described above, when the lighting apparatus 101 is mounted to the bracket 141 as shown in FIG. 8, since the glow lamp 164 does not operate, the lighting apparatus 101 is capable of operating with stability. Moreover, the lighting apparatus 101 is capable of operating stably in the same manner as described above even when the plug 161, the switch 162, and the ballast 163 are connected between the terminal pin 104b and the terminal pin 104c while the glow lamp 164 is connected between the terminal pin 104a and the terminal pin 104d.

As seen, the lighting apparatus 101 according to the first embodiment of the present invention can be used without any need whatsoever to modify the bracket 141 of an ordinary fluorescent lamp. Since the lighting apparatus 101 according to the first embodiment of the present invention can be used without modifying the bracket 141, it is possible to simply use a lighting fixture that makes full use of the characteristics of the light emitting diodes used as the solid state light emitting devices 131 without generating incidental cost.

Moreover, while a bracket of the glow lamp lighting system has been used as the bracket 141 in the above description, the lighting apparatus 101 can also be used with brackets of the inverter system and the rapid start system without any modification whatsoever to the lighting apparatus 101, the bracket and the like. This is due to the fact that, as described above, with the lighting apparatus 101 according to the first embodiment of the present invention, one terminal pair (for example, the terminal pin 104b and the terminal pin 104d shown in FIG. 6) is not affected by power supplied to the other terminal pair (the terminal pin 104a and the terminal pin 104c).

With a conventional lighting apparatus using the solid state light emitting devices, a bracket of the glow lamp lighting system can be operated with stability by physically detaching the glow lamp from the bracket. However, the conventional lighting apparatus using the solid state light emitting devices requires that glow lamps are physically detached which is troublesome. In addition, since brackets of the inverter system and the rapid start system have built-in circuits for driving the fluorescent lamp, detachment cannot be performed as easily as in the case of the glow lamp. When using the conventional lighting apparatus that uses the solid state light emitting devices with brackets of the inverter system and the rapid start system, high voltage and the like is applied to the lighting apparatus, thereby causing deterioration or breakage of the solid state light emitting devices. In other words, the conventional lighting apparatus using the solid state light emitting diodes cannot be used with brackets of the inverter system and the rapid start system.

On the other hand, with the lighting apparatus 101 according to the first embodiment of the present invention, one terminal pair is not affected by power supplied to the other terminal pair. Therefore, the lighting apparatus 101 can be used in replacement of conventional fluorescent lamps not only with fluorescent lamp fixtures of the glow lamp lighting system, but also with fluorescent lamp fixtures of the inverter system or the rapid start system.

Moreover, when operating the lighting apparatus 101 using a bracket of the inverter system, it is preferable that fast-response diodes are used for the diodes D1 to D8 included in the diode bridge circuits 155 and 156. This enables the diode bridge circuits 155 and 156 to operate on the frequency of the voltage outputted by the inverter used in the bracket of the inverter system.

More specifically, an inverter used in a bracket of the inverter system is designed to generate frequencies equal to or more than 100 kHz in order to avoid auditory area (equal to or less than 20 kHz) frequencies and in consideration of efficiency and the like. Therefore, it is preferable that diodes which can operate on a frequency that is at least equal to or more than 20 kHz and preferably a frequency equal to or more than 200 kHz are used for the diodes D1 to D8 included in the diode bridge circuits 155 and 156. This arrangement enables efficient conversion of high frequency alternating current power into direct current power by the direct current conversion circuit 135.

In addition, by providing the lighting apparatus 101 according to the first embodiment of the present invention with the input circuit 134, the lighting apparatus 101 can be used with a bracket of a fluorescent lamp of a type that performs continuity checks.

Furthermore, the lighting apparatus 101 according to the first embodiment of the present invention uses high power light emitting diodes having power consumption equal to or more than 1 W as the solid state light emitting devices 131. As a result, illuminance that is suitable for practical use as a lighting apparatus can be obtained.

Moreover, the lighting apparatus 101 according to the first embodiment of the present invention does not use, for instance, a constant current control circuit and a lighting control circuit used in the lighting apparatus described in Patent Reference 2. As a result, simplification of structure and reduction of cost can be achieved.

In addition, the lighting apparatus 101 according to the first embodiment of the present invention is capable of performing conversion with smaller loss of power by converting alternating current power into direct current power using a full-wave rectifier circuit.

Furthermore, in the lighting apparatus 101 according to the first embodiment of the present invention, due to the inclusion of the diode bridge circuits 155 and 156, when alternating current power is supplied to any two of the terminal pin 104a, the terminal pin 104b, the terminal pin 104c, and the terminal pin 104d, remaining two terminal pins to which the alternating current power is not supplied is unaffected by the supplied alternating current power. In other words, the lighting apparatus 101 is able to operate normally regardless of the orientation of the connection of the lighting apparatus 101 to the bracket 141. In addition, the lighting apparatus 101 is able to operate normally both when alternating current power is supplied to the terminal pin 104a and the terminal pin 104b and when alternating current power is supplied to the terminal pin 104c and the terminal pin 104d.

Moreover, it takes the light emitting diodes, used as the solid state light emitting devices 131, a significantly long time, namely, 40,000 hours or more, before its emission intensity drops to no more than 70% of its initial level. By using the solid state light emitting devices 131 as a light source, the lighting apparatus 101 according to the first embodiment of the present invention is able to achieve a long life in comparison to the life of the fluorescent lamp 181 (6,000 hours). By using the solid state light emitting devices 131 as a light source, the lighting apparatus 101 is able to achieve a long life in comparison to the fluorescent lamp 181 (a life of 6,000 hours). Consequently, by using the lighting apparatus 101 according to the present invention, the frequency of changing lighting apparatuses can be reduced. In particular, industrial facilities such as factories typically have high ceilings on which the bracket 141 is installed. In other words, the cost of changing the lighting apparatuses is high, and the work involved is hazardous. In this regard, by using the lighting apparatus 101 according to the present invention in an industrial facility such as factories, the cost of changing the lighting apparatuses can be reduced and the work involved can be less hazardous.

In addition, since the solid state light emitting devices 131 do not use mercury, a lighting apparatus 101 can be provided which has a smaller environmental impact in comparison to the fluorescent lamp 181 which contains mercury. This is due to the fact the mercury has a significant adverse effect on the nerve systems of unborn babies as well as adults.

Furthermore, since the dimensions of the lighting apparatus 101 according to the first embodiment of the present invention are the same as that of an ordinary double-capped fluorescent lamp, the lighting apparatus 101 can be mounted to a bracket of an ordinary fluorescent lamp. As a result, since the lighting apparatus 101 according to the first embodiment of the present invention does not require a special bracket, practicability can be enhanced.

Results of a comparison between the capabilities of the lighting apparatus 101 according to the first embodiment of the present invention and the capabilities of a fluorescent lamp are presented below.

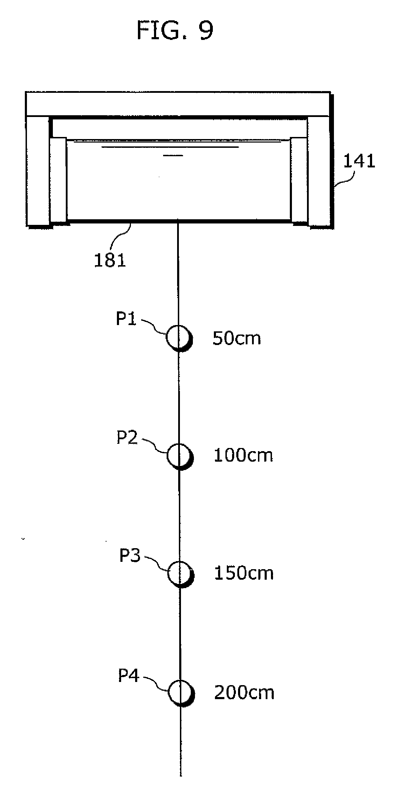

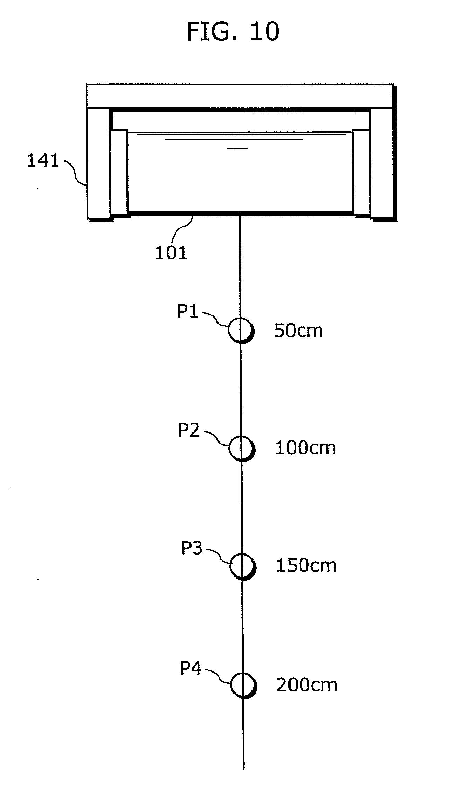

FIG. 9 is a diagram schematically showing a measurement state of the performance of a fluorescent lamp. FIG. 10 is a diagram schematically showing a measurement state of the performance of the lighting apparatus 101 according to the first embodiment of the present invention.

The fluorescent lamp 181 was mounted to the bracket 141 as shown in FIG. 9, and illuminance was measured at points P1 to P4 located directly under the fluorescent lamp 181. In the same manner, the lighting apparatus 101 was mounted to the bracket 141 as shown in FIG. 10, and illuminance was measured at points P1 to P4 located directly under the lighting apparatus 101. In this case, the distance from the fluorescent lamp 181 and the lighting apparatus 101 to the point P1 is 50 cm; the distance from the fluorescent lamp 181 and the lighting apparatus 101 to the point P2 is 100 cm; the distance from the fluorescent lamp 181 and the lighting apparatus 101 to the point P3 is 150 cm; and the distance from the fluorescent lamp 181 and the lighting apparatus 101 to the point P4 is 200 cm. In addition, the brackets 141 to which the fluorescent lamp 181 and the lighting apparatus 101 were mounted have the same capabilities, and the power consumption of the fluorescent lamp 181 is the same as that of the lighting apparatus 101.

Table 1 is a table showing the results of measurements of the illuminance of light emitted from the fluorescent lamp 181 and the lighting apparatus 101 taken at the respective points of P1 to P4 in the states shown in FIGS. 9 and 10. Note that the respective values of Table 1 have been normalized by setting the illuminance of light emitted by the fluorescent lamp 181 at point P4 as 1.0.

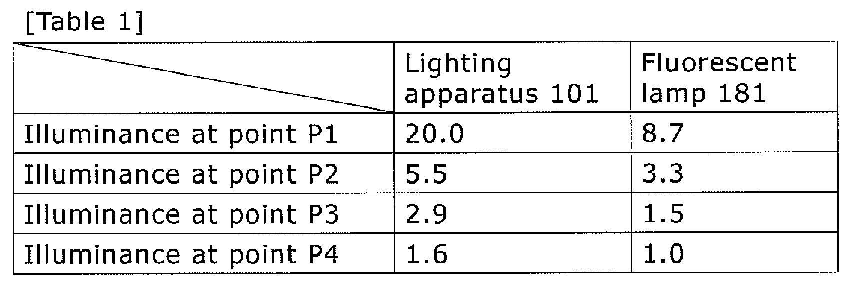

As shown in Table 1, with the lighting apparatus 101 according to the first embodiment of the present invention, illuminance that is 1.6 times that of the fluorescent lamp 181 can be obtained at the point P4 which is 200 cm away. In addition, it is shown that illuminance that is around 1.7 to 2.3 times that of the fluorescent lamp 181 can also be obtained at the points P1 to P3. As seen, the lighting apparatus 101 according to the first embodiment of the present invention is capable of obtaining sufficient illuminance as a replacement light source of the fluorescent lamp 181.

### (Second Embodiment)

A lighting apparatus according to a second embodiment of the present invention is capable of efficiently discharging heat generated inside the lighting apparatus into the air by having a hollow structure inside the casing and utilizing peripheral air convection. As a result, a lighting apparatus according to the present invention achieves an improvement in heat discharge effectiveness.

As described above, in the lighting apparatus 101 according to the first embodiment of the present invention, high power light emitting diodes are used as the solid state light emitting devices 131 in order to obtain sufficient illuminance. With light emitting diodes, a major portion (approximately 80%) of inputted energy turns into heat as loss. High power light emitting diodes have high power consumption, and accordingly, a significant amount of energy is discharged as heat. Accumulation of this heat in the vicinity of light emitting diodes leads to a decline in luminous intensity, a deterioration of life characteristics and the like of the light emitting diodes. In the worst case, non-lighting of light emitting diodes occurs. Therefore, it is imperative that this heat is appropriately treated.

First, a configuration of a lighting apparatus according to the second embodiment of the present invention is described.

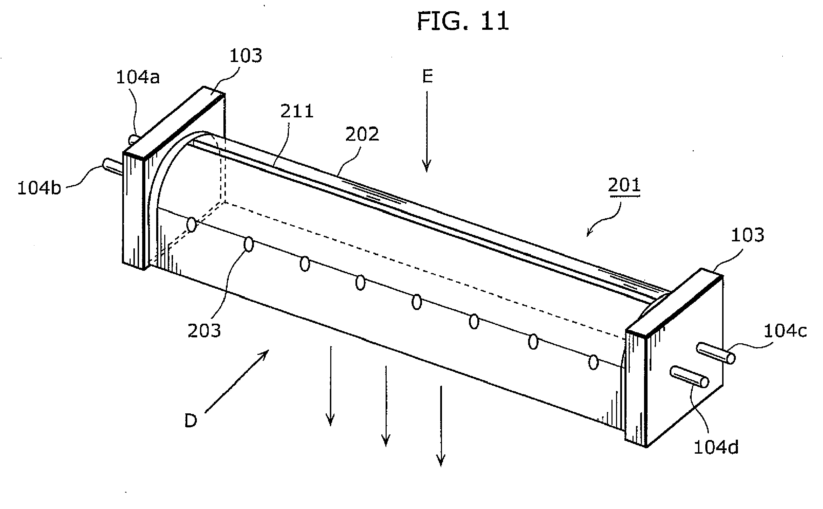

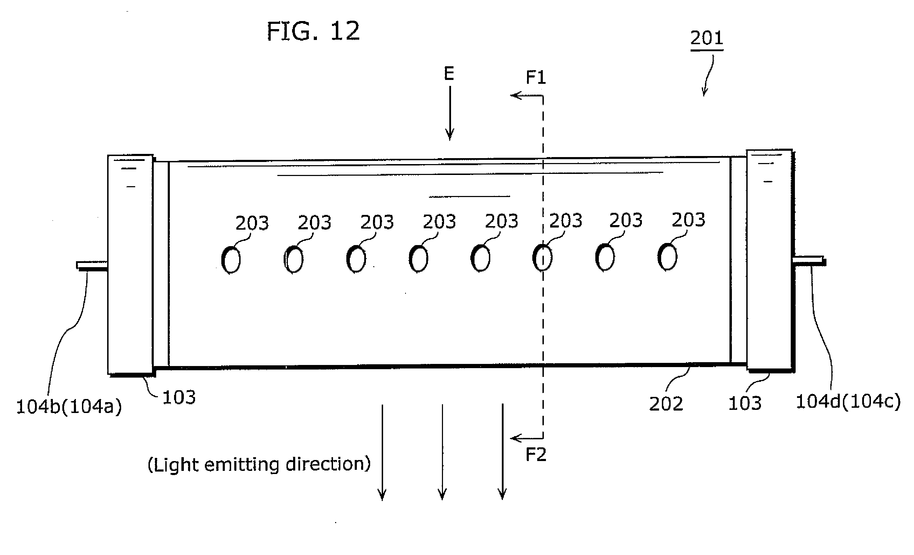

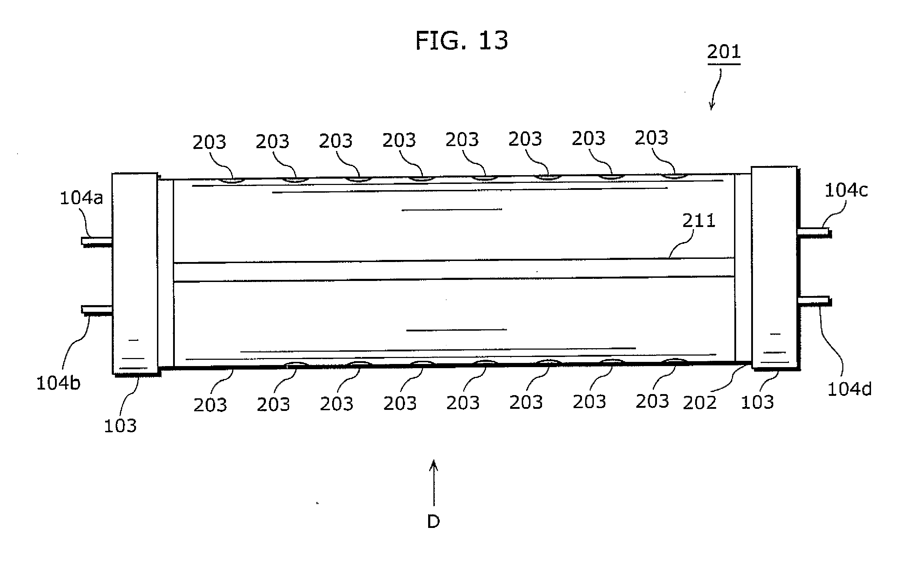

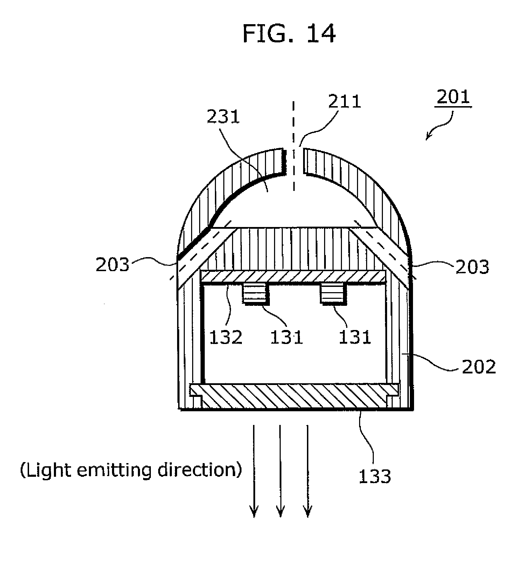

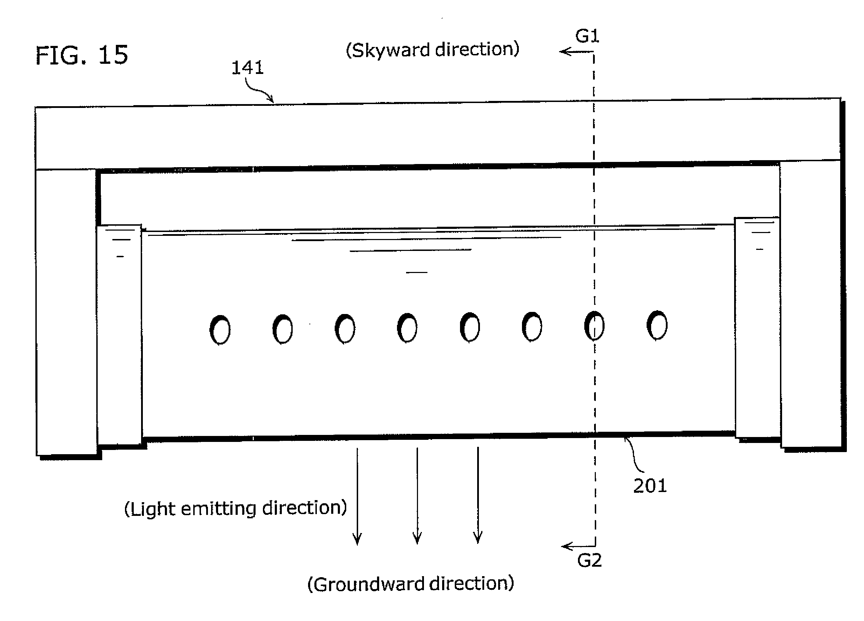

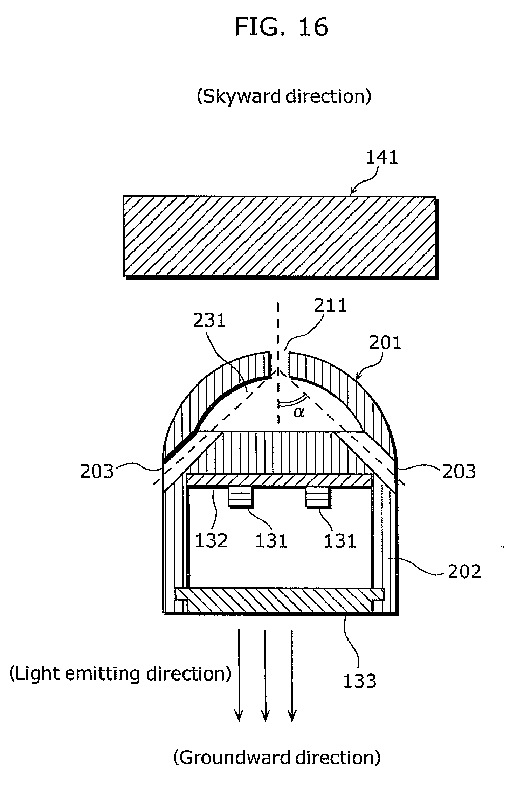

FIG. 11 is a perspective view showing the exterior of a lighting apparatus 201 according to the second embodiment of the present invention. FIG. 12 is a plan view taken from a lateral surface (the direction D shown in FIG. 11) of the lighting apparatus 201 according to the second embodiment of the present invention. FIG. 13 is a plan view taken from an upper side (the direction E shown in FIG. 11) of the lighting apparatus 201 according to the second embodiment of the present invention. FIG. 14 is a cross sectional diagram showing a structure of the lighting apparatus 201 taken along the F1-F2 plane shown in FIG. 12. FIG. 15 is a diagram showing a state in which the lighting apparatus 201 is mounted on the bracket 141 of a double-capped fluorescent lamp. FIG. 16 is a cross sectional diagram showing a structure of the lighting apparatus 201 and the bracket 141 taken along the G1-G2 plane shown in FIG. 15.

Note that elements which are the same as to those shown in FIGS. 1 to 5 have the same numerical references, and a description thereof is omitted.

The only difference between the lighting apparatus 201 according to the second embodiment and the lighting apparatus 101 according to the first embodiment described above is that the casing 102 has been changed to a casing 202.

The cross section at an upper side (the upper side in FIG. 14) of the casing 202 has an approximately semicircular shape. A plurality of inflow ports 203, an outflow port 211, and a hollow area 231 are formed at the casing 202.

The casing 202 is made of a metal with a high thermal conductivity (preferably, a metal with a thermal conductivity equal to or more than 200 W·m⁻¹·K⁻¹). For instance, the casing 102 is made of aluminum. The use of aluminum for the casing 102 is due to the fact that aluminum: is inexpensive; is easy to form; has excellent recyclability; has a thermal conductivity equal to or more than 200 W·m⁻¹·K⁻¹; has high discharge characteristics, and the like. For instance, the casing 202 can be created using the drawing method.

In addition, making the casing 202 from aluminum, it is desirable that the casing 202 undergoes alumite treatment. Alumite treatment increases the surface area and enhances heat discharge effectiveness.

As shown in FIG. 15, the lighting apparatus 201 is mounted to the bracket 141 so that light is emitted in an earthward direction (in this case, earthward direction refers to a floorward direction when indoors, and a groundward direction when outdoors).

The hollow area 231 has a hollow structure columnarily formed in the longitudinal direction of the casing 202. The cross section of the columnar hollow area 231 has an approximately semicircular shape. The hollow area 231 is formed inside the casing 202 at a side opposite to the light emitting direction of the solid state light emitting devices 131 with respect to the position at which the board 132 is disposed. In other words, the hollow area 231 is formed on the upper side of the solid state light emitting devices 131 and the board 132 when the light emitting direction (downwards in FIG. 16) of the lighting apparatus 201 is assumed to be the lower side. The surface of the lower side of the hollow area 231 has a planar shape, while the surface of the upper side of the hollow area 231 has an approximately semicircular shape in a cross-sectional view. In addition, the hollow area 231 is connected to the exterior of the lighting apparatus 201 via the inflow ports 203 and the outflow port 211.

The outflow port 211 is a through hole extending from the upper side surface of the hollow area 231 to the outside of the upper surface of the casing 202. The outflow port 211 is a hole that functions as an outlet for fluids (air) from the inside of the hollow area 231. The outflow port 211 is formed along the longitudinal direction of the casing 202. The outflow port 211 is formed at a position on the casing 102 that is opposite to the light emitting direction of the solid state light emitting devices 131. In addition, the lighting apparatus 201 is mounted to the bracket 141 so that the outflow port 211 faces the bracket 141. In other words, in a state where the lighting apparatus 201 is mounted to the bracket 141, the outflow port 211 faces approximately skywards (preferably, within a range of 0 to 30 degrees from a skyward direction: In this case, a skyward direction refers to the ceilingward direction when indoors, and the spaceward direction when outdoors).

The inflow ports 203 are through holes extending from the hollow area 231 to the exterior of both lateral surfaces of the casing 202. The inflow ports 203 are holes that function as inlets for fluids (air) to the inside of the hollow area 231. A plurality of inflow ports 203 are formed on both lateral surfaces of the casing 202 with respect to the light emitting direction of the solid state light emitting devices 131. The plurality of inflow ports 203 formed on each lateral surface of the casing 202 are arranged in series at regular intervals in the longitudinal direction of the casing 202. In addition, the inflow ports 203 on the lateral surfaces of the casing 202 are positioned on a lower side of the hollow area 231 (the light emitting direction of the solid state light emitting devices 131). In other words, the direction of the inflow ports 203 extending from the outer surface of the casing 202 to the hollow area 231 is an obliquely skyward direction (obliquely upwards in FIG. 16). For instance, the angle formed between the direction of the inflow ports 203 from the hollow area 231 side to the outer surface side of the casing 202 and the direction of the outflow port 211 from the outer surface side of the casing 202 to the hollow area 231 side is 45 degrees.

Moreover, the cross-sectional shape of the hollow area 231 is not limited to an approximately semicircular shape as long as the shape of a portion thereof is streamlined. It is preferable that the surface of the hollow area 231 which is on the opposite side (the upward direction in FIG. 14) of the light emitting direction of the solid state light emitting devices 131 has a streamlined shape. In this case, a streamlined shape refers to a shape having a surface over which air can smoothly move. Streamlining the shape of the surface of the hollow area 231 which is on the side opposite to the light emitting direction of the solid state light emitting devices 131 allows air to flow smoothly over the hollow area 231, thereby enabling efficient heat discharge from the casing 202 into the air.

The shape of the lower surface of the hollow area 231 need not be planar. Note that by giving the lower surface of the hollow area 231 a planar shape, the distances from the respective solid state light emitting devices 131 to the hollow area 231 can be equalized. In addition, the hollow area 231 can be simply formed.

Furthermore, in the casing 202, a single hollow area 231 may be formed or a plurality of hollow areas 231 linearly arranged in the longitudinal direction of the casing 202 may be formed.

Moreover, the external shape of the casing 202 is not limited to the above-described cross-sectional shapes. For instance, the casing 202 and the protective translucent plate 133 may both have an approximately half pipe shape, in which case the casing 202 and the protective translucent plate 133 may be integrally combined to form a tubular cross section. In addition, while the shape of the outer surface on the upper side of the casing 202 is similar to the shape of the upper surface of the hollow area 231, the two shapes may instead be different.

Moreover, it is preferable that the shape of the outer surface on the upper side of the casing 202 is streamlined. As a result, since air flows smoothly over the upper surface of the casing 202, heat discharge from the casing 202 into the air can be efficiently performed.

In addition, the shapes and numbers of the inflow ports 203 and the outflow port 211 are merely exemplary, and are not limited to this example. The shapes and numbers of the inflow ports 203 and the outflow port 211 may be arbitrarily determined in consideration of processing costs and the like.

For instance, while it has been described that the outflow port 211 is a single gap formed along the longitudinal direction of the casing 202, a plurality of gaps may instead be linearly arranged in the longitudinal direction of the casing 202. Moreover, the shape of the outflow port 211 is not limited to a rectangular shape, and may instead take an arbitrary shape such as a circular or elliptical shape.

In addition, an arbitrary number of inflow ports 203 may be provided. For instance, inflow ports 203 having the same shape as the outflow port 211 may be respectively formed on both lateral surfaces of the casing 202. Furthermore, the shape of the inflow ports 203 is not limited to an elliptical shape, and may instead take an arbitrary shape such as a rectangular shape.

Moreover, the angle formed between the direction of the inflow ports 203 from the hollow area 231 side to the outer surface side of the casing 202 and the direction of the outflow port 211 from the outer surface side of the casing 202 to the hollow area 231 side need not be limited to 45 degrees. The angle formed between the direction of the inflow ports 203 from the hollow area 231 side to the outer surface side of the casing 202 and the direction of the outflow port 211 from the outer surface side of the casing 202 to the hollow area 231 side may be arbitrarily set within a range from 0 to 90 degrees according to the shape of the lighting apparatus 201 and the like. As a result, heated air in the periphery of the lighting apparatus can efficiently flow into the hollow area 231 from the inflow ports 203. In addition, air flown into the hollow area 231 can efficiently flow out to the outside.

Next, a heat discharge mechanism of the lighting apparatus 201 is described.

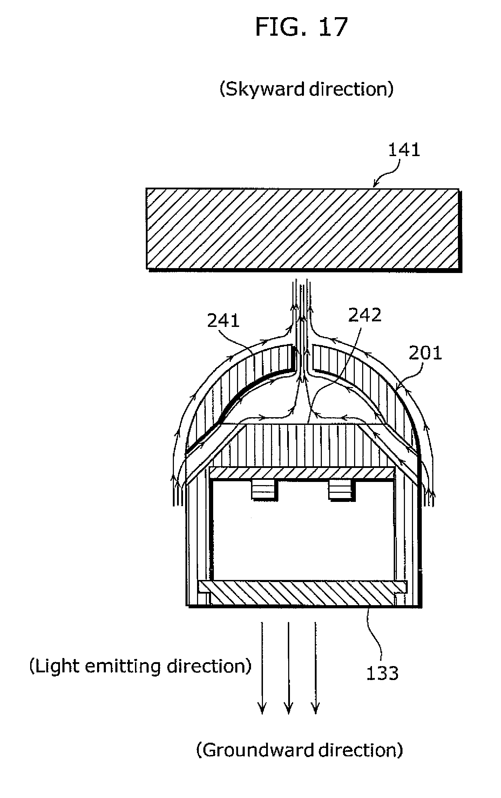

FIG. 17 is a diagram showing airflow in a state where the lighting apparatus 201 is turned on. Moreover, similar to FIG. 16, FIG. 17 is a cross sectional diagram showing a structure of the lighting apparatus 201 and the bracket 141 taken along the G1-G2 plane shown in FIG. 15.

Heat generated from the solid state light emitting devices 131 are diffused in the entire casing 202 via the board 132. Heat diffused to the casing 202 is discharged into the air through the effective use of convection.

More specifically, the air around the casing 202 is first heated by the heat diffused by the casing 202 and becomes an updraft. A portion of the air that has become the updraft flows on an external surface 241 of the casing 202. This air rises while receiving heat from the external surface 241. In other words, discharge of heat from the external surface 241 into the air is performed.

In addition, another portion of the air that has become the updraft flows into the hollow area 231 from the inflow ports 203. This influent air flows out to the exterior of the hollow area 231 via the outflow port 211 while receiving heat from an interior surface 242 of the casing 202. This air rises while receiving heat from the internal surface 242. In other words, discharge of heat from the internal surface 242 into the air is performed. At this point, due to the fact that a portion of the shape of the hollow area 231 is streamlined, air flows more smoothly. As a result, the efficiency of heat discharge is further enhanced.

As seen, the lighting apparatus 201 according to the second embodiment of the present invention is capable of efficiently using the effect of updrafts attributable to heated air or, in other words, convection. In addition, the lighting apparatus 201 is capable of discharging heat not only from the external surface 241 but also from the internal surface 242. In other words, since heat discharge can be performed over a wide area, the lighting apparatus 201 is able to effectively discharge heat, generated from the solid state light emitting devices 131 and diffused in the entire casing 202, into the air.

In this case, it is desirable that the inflow ports 203 and the solid state light emitting devices 131 are disposed in close proximity to each other to the extent possible (preferably, a linear distance equal to or less than 20 mm). For instance, the inflow ports 203 are formed such that the distance between the inflow ports 203 and the solid state light emitting devices 131 are closer than that between the outflow port 211 and the solid state light emitting devices 131. This is due to the fact that some temperature gradient exists even though heat generated from the solid state light emitting devices 131 is diffused in the entire casing 202, and as a result, the vicinities of the solid state light emitting devices 131 reach a high temperature. By placing the inflow ports 203 and the solid state light emitting devices 131 in close proximity to each other, it is possible to enhance discharge of heat from the high temperature portion of the casing 202 into the air.

It is needless to say that, even in a case where the lighting apparatus 201 is mounted to the bracket 141 such that light is emitted in a direction other than groundwards, updrafts attributable to heated air are naturally generated, and heat discharge adapting to the mounted state is performed.

A conventional technique for enhancing heat discharge effectiveness is described in Japanese Unexamined Patent Application Publication 2001-305970. Japanese Unexamined Patent Application Publication 2001-305970 discloses an advertising unit which uses light emitting diodes and which is provided with convection holes in order to generate air flow (convection). This arrangement aims to generate convection by providing holes at upper and lower portions of the advertising unit in order to remove heat generated from the light emitting diodes.

However, while this advertising unit aims to discharge heat into the air by bringing convection air into direct contact with the light emitting diodes, with the disclosed method, there remains doubt as to whether convection is really generated. In addition, even when convection is generated, there is no guarantee that heat discharge into the air is efficiently performed since the area of the surfaces of the light emitting diodes is insufficient. Furthermore, it is provided that the board, to which the light emitting diodes are mounted, is made of plastic or glass. These materials have low heat conductivity and are incapable of diffusing heat generated from the light emitting diodes. Therefore, it appears that heat discharge via the board also cannot be expected to occur.

Presented below are results of a comparison between the heat discharge capabilities of the lighting apparatus 201 according to the second embodiment of the present invention and the heat discharge capabilities of a conventional lighting apparatus. As an example, heat discharge capabilities of the lighting apparatus 101 according to the above-described first embodiment, a lighting apparatus 501 that is the lighting apparatus 101 mounted with a heat radiating fin, and the lighting apparatus 201 according to the second embodiment are compared.

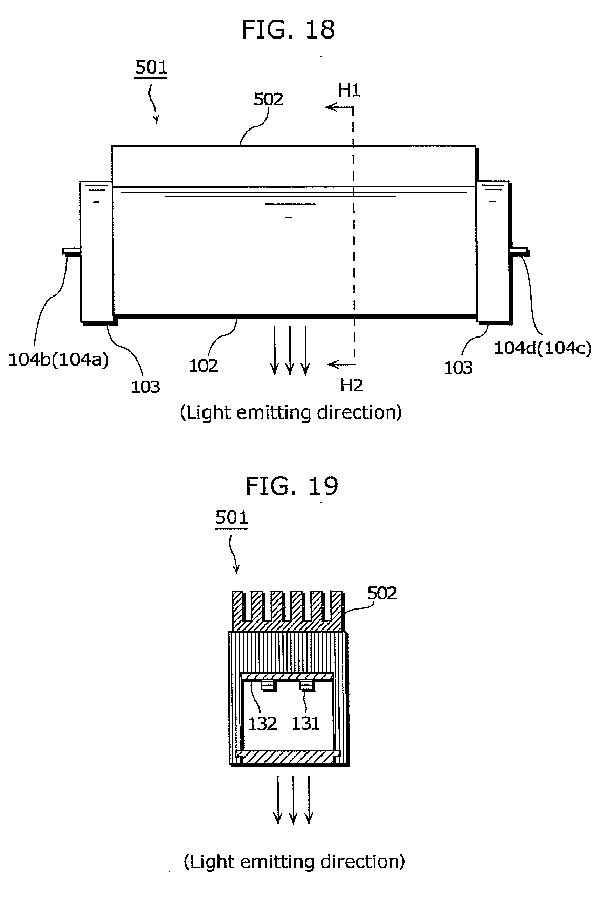

FIG. 18 is a plan view taken from a lateral surface of the lighting apparatus 501 that is the lighting apparatus 101 mounted with a heat radiating fin. FIG. 19 is a cross sectional diagram showing a structure of the lighting apparatus 501 taken along the H1-H2 plane shown in FIG. 18.

As shown in FIGS. 18 and 19, the lighting apparatus 501 includes a heat radiating fin 502 formed on the casing 102(in the upward direction when the light emitting direction is assumed to be the downward direction). The heat radiating fin 502 has a cross-sectional shape having a plurality of concavities and convexities. The plurality of concavities and convexities increase the surface area of the heat radiating fin 502. As a result, heat discharge effectiveness into the air can be enhanced.

Table 2 is a table showing results of a comparison between the heat discharge capabilities of the lighting apparatus 101 according to the first embodiment, the lighting apparatus 501 having the heat radiating fin 502, and the lighting apparatus 201 according to the second embodiment. Note that the decreased temperatures shown in Table 2 are values calculated using computer simulation software. A constant heat is applied to the lighting apparatus 101, the lighting apparatus 501, and the lighting apparatus 201. In addition, the decreased temperatures shown in Table 2 are provided using the temperature of a highest temperature point of the lighting apparatus 101 as a reference temperature. Accordingly, the decreased temperatures shown in Table 2 show how much the temperatures of the highest temperature points of the lighting apparatus 501 and the lighting apparatus 201 have dropped with respect to the reference temperature.

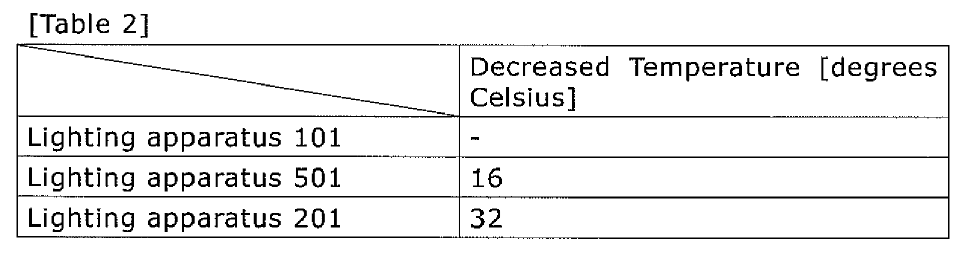

As shown in Table 2, the lighting apparatus 201 is capable of achieving a greater decrease in the temperature compared to the lighting apparatus 101 and the lighting apparatus 501. In addition, the present inventors have confirmed that a similar decrease in the temperature is manifested by an experiment using actual apparatuses.

Therefore, it is apparent that the lighting apparatus 201 according to the second embodiment of the present invention achieves significant heat discharge effectiveness. In other words, the lighting apparatus 201 according to the second embodiment of the present invention can be described as being capable of maximizing the characteristics of the solid state light emitting devices 131.

Note that the lighting apparatus 201 according to the present invention is not limited to the above-described example, and can be freely modified and implemented without departing from the scope of the present invention.

For example, while the lighting apparatus 101 and the lighting apparatus 201 have been described above as of a type applicable to brackets of ordinary fluorescent lamps, the lighting apparatuses may be realized as of a type that uses a dedicated bracket or of a type that operates without the use of a bracket by directly receiving a supply of commercial power.

In addition, while it has been described above that the directionality of light emitted by the solid state light emitting devices 131 are reduced by forming minute, uneven concavities and convexities on the protective translucent plate 133, any of the following three methods may be employed instead of forming the concavities and the convexities on the protective translucent plate 133.

As a first method, a diffusion sheet that diffuses light may be applied to the protective translucent plate 133. More specifically, the lighting apparatus 101 and the lighting apparatus 201 may include a diffusion sheet formed on the outer surface or the inner surface of the protective translucent plate 133 and which diffuses light emitted by the solid state light emitting devices 131. The diffusion sheet diffuses light emitted by the solid state light emitting devices 131. As a result, the lighting apparatuses 101 and 201 according to the present invention are capable of reducing the directionality of light emitted by the solid state light emitting devices 131, and are capable of illuminating a wide area.

As a second method, an additive for diffusing light outputted by the solid state light emitting devices 131 may be added to the protective translucent plate 133. The additive allows the light emitted by the solid state light emitting devices to diffuse. As a result, the lighting apparatuses 101 and 201 according to the present invention are capable of reducing the directionality of light emitted by the solid state light emitting devices 131, and are capable of illuminating a wide area.

As a third method, concavities and convexities may be formed on the protective translucent plate 133 as described below.

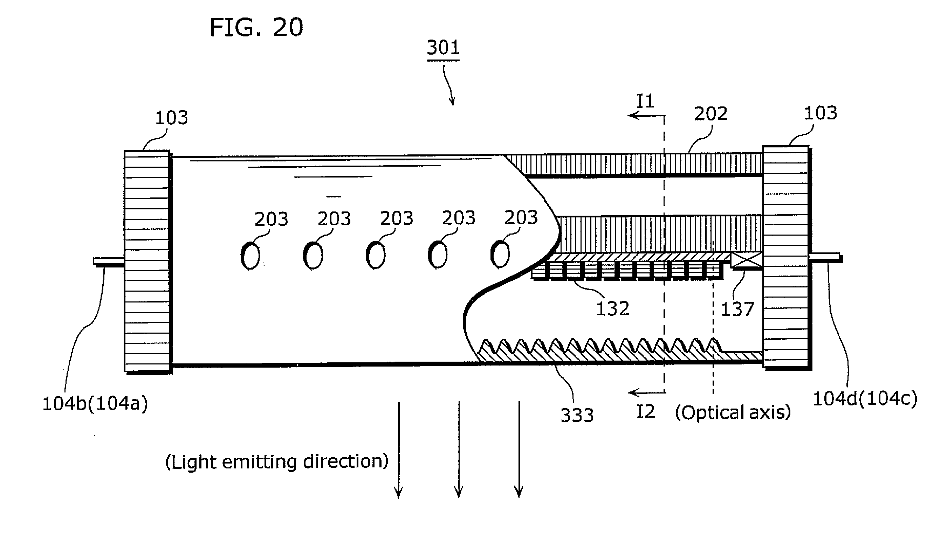

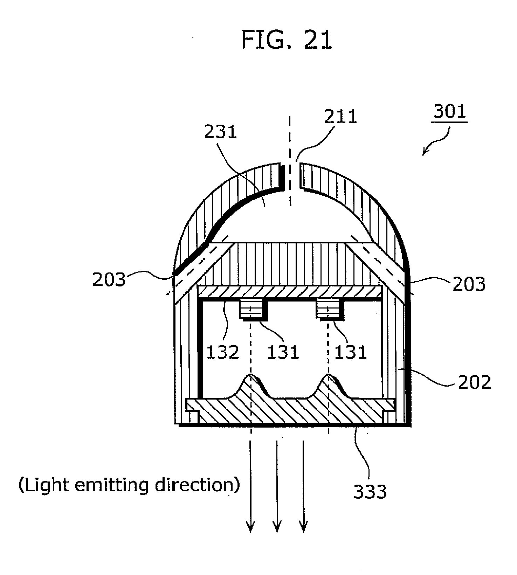

FIG. 20 is a diagram showing the exterior taken from a lateral surface and a cross sectional structure of a lighting apparatus 301 that is a modification of the lighting apparatus 201 according to the second embodiment. FIG. 21 is a cross sectional diagram showing a structure of the lighting apparatus 301 taken along the I1-I2 plane shown in FIG. 20. Note that elements which are the same as those shown in FIGS. 11 to 14 have the same numerical references.

The lighting apparatus 301 differs from the lighting apparatus 201 in the configuration of the protective translucent plate 133. The lighting apparatus 301 is provided with a protective translucent plate 333. Note that other components are the same as those of the lighting apparatus 201, and a detailed description thereof is omitted.

As shown in FIGS. 20 and 21, concave and convex shapes adapting to the solid state light emitting devices 131 are provided on an inner surface (the surface on the upper side in FIG. 20) of the protective translucent plate 333. More specifically, a convex shape is formed on the light emitting optical axis of each solid state light emitting device 131 in the casing 202. The quantity of light reaching the protective translucent plate 333 from the solid state light emitting devices 131 increases on the optical axes of the solid state light emitting devices 131. Accordingly, light is diffused by the convex shapes to reduce the quantity of light.

On the other hand, the quantity of light reaching the protective translucent plate 333 from the solid state light emitting devices 131 decreases in parts that deviate from the optical axes of the solid state light emitting devices 131. Therefore, the diffused amount of light is kept to a minimum by concave shapes.

As seen, the uniformity of light intensity distribution in the longitudinal direction (the lateral direction in FIG. 20) and the direction perpendicular to the longitudinal direction (the lateral direction in FIG. 21) of the lighting apparatus 301 can be enhanced. As a result, the lighting apparatus 301 according to the present invention is capable of reducing the directionality of light emitted by the solid state light emitting devices, and is capable of illuminating a wide area. Note that the concave and convex shapes may instead be formed on the outer surface (the surface on the lower side in FIG. 20) of the protective translucent plate 333.

In addition, the directionality of light emitted from the solid state light emitting devices 131 may be reduced by using two or more methods among the above-described first to third methods and the method in which minute, uneven concavities and convexities are formed on the protective translucent plate 133.

Furthermore, electroluminescence may be used as the solid state light emitting devices 131. Electroluminescence is a direct current-driven element to which the present invention can be applied. Similar to light emitting diodes, electroluminescence is mercury-free, and is a noteworthy light source.

Moreover, by forming the casing 202 and the protective translucent plate 133 in annular shapes, the lighting apparatus 201 can be used as a replacement light source for a ring-shaped fluorescent lamp.

### Industrial Applicability

The present invention is applicable to a lighting apparatus, and particularly to a lighting apparatus which uses a solid state light emitting device and which is usable with fluorescent lamp fixtures.

## Claims

1. A lighting apparatus comprising:
a plurality of solid state light emitting devices;
a holding unit operable to hold said plurality of solid state light emitting devices;
a casing inside which said holding unit is disposed;
a first terminal and a second terminal disposed at a longitudinal end of said casing;
a third terminal and a fourth terminal disposed at the other longitudinal end of said casing;
a first rectification unit operable to convert alternating current power, supplied from an external source to said first terminal and said third terminal, into direct current power, and to supply the direct current power to said plurality of solid state light emitting devices; and
a second rectification unit operable to convert alternating current power, supplied from the external source to said second terminal and said fourth terminal, into direct current power, and to supply the direct current power to said plurality of solid state light emitting devices.

2. The lighting apparatus according to Claim 1,
wherein said first rectification unit and said second rectification unit are respectively provided with full-wave rectification functions.

3. The lighting apparatus according to Claim 1,
wherein said first rectification unit includes:
a first diode having an anode connected to said first terminal and a cathode connected to an anode of said solid state light emitting devices;
a second diode having an anode connected to a cathode of said solid state light emitting devices and a cathode connected to said first terminal;
a third diode having an anode connected to said third terminal and a cathode connected to the anode of said solid state light emitting devices; and
a fourth diode having an anode connected to the cathode of said solid state light emitting devices and a cathode connected to said third terminal, and
said second rectification unit includes:
a fifth diode having an anode connected to said second terminal and a cathode connected to the anode of said solid state light emitting devices;
a sixth diode having an anode connected to the cathode of said solid state light emitting devices and a cathode connected to said second terminal;
a seventh diode having an anode connected to said fourth terminal and a cathode connected to the anode of said solid state light emitting devices; and
an eighth diode having an anode connected to the cathode of said solid state light emitting devices and a cathode connected to said fourth terminal.

4. The lighting apparatus according to Claim 3,
wherein said first diode, said second diode, said third diode, said fourth diode, said fifth diode, said sixth diode, said seventh diode, and said eighth diode are diodes which can operate on a frequency of at least 20 kHz.

5. The lighting apparatus according to one of Claims 1 to 4, further comprising at least one of:
a first input circuit which has a resistance component and which is connected between said first terminal and said second terminal; and a second input circuit which has a resistance component and which is connected between said third terminal and said fourth terminal.

6. The lighting apparatus according to one of Claims 1 to 5,
wherein said plurality of solid state light emitting devices are series-connected, and
said plurality of solid state light emitting devices are set such that the summation of forward voltages of said plurality of solid state light emitting devices is approximately equal to the direct current voltage outputted from one of said first rectification unit and said second rectification unit.

7. The lighting apparatus according to one of Claims 1 to 6, further comprising
an adjustment unit which includes a resistance component and which is connected between said first rectification unit and said second rectification unit, and said plurality of solid state light emitting devices.

8. The lighting apparatus according to one of Claims 1 to 7, further comprising
a protection unit which includes a capacitor element and which is connected in parallel to said plurality of solid state light emitting devices.

9. The lighting apparatus according to one of Claims 1 to 8,
wherein said holding unit is made of metal.

10. The lighting apparatus according to Claim 9,
wherein said casing is made of metal, and
formed within said casing are:
a first space area which has a hollow structure in which said holding unit is disposed;
a second space area which has a hollow structure;
one or more first apertures which are holes extending from said second space area to an exterior of said casing and which function as inlets for air to an interior of said second space area; and
one or more second apertures which are holes extending from said second space area to the exterior of said casing and which function as outlets for air from the interior of said second space area.

11. The lighting apparatus according to Claim 10,
wherein said second space area is formed, in said casing, on a side opposite to the light emitting direction of said plurality of solid state light emitting devices, with respect to a position at which said holding unit is disposed.

12. The lighting apparatus according to one of Claims 10 and 11,
wherein said second aperture is formed on a side of said casing opposite to the light emitting direction of said plurality of solid state light emitting devices.

13. The lighting apparatus according to one of Claims 10, 11 and 12,
wherein said first aperture is formed on a lateral surface of said casing with respect to the light emitting direction of said plurality of solid state light emitting devices.

14. The lighting apparatus according to one of Claims 10 to 13,
wherein the shape of a surface of said second space area on a side opposite to the light emitting direction of said plurality of solid state light emitting devices is a streamlined shape.

15. The lighting apparatus according to one of Claims 10 to 14,
wherein a distance between said first aperture and said solid state light emitting devices is shorter than a distance between said second aperture and said solid state light emitting devices.

16. The lighting apparatus according to one of Claims 10 to 15,
wherein an angle formed between a direction of said first aperture from a said-second-space-area side to an outer surface side of said casing and a direction of said second aperture from the outer surface side of said casing to the said-second-space-area side ranges from 0 to 90 degrees.

17. The lighting apparatus according to one of Claims 1 to 16,
wherein said casing includes a translucent part which has translucency and which is formed in the light emitting direction of said plurality of solid state light emitting devices.

18. The lighting apparatus according to Claim 17,
wherein said translucent part has concavities and convexities formed on one of an outer surface and an inner surface.

19. The lighting apparatus according to Claim 18,
wherein said convexities are respectively formed on the light emitting optical axes of said plurality of solid state light emitting devices.

20. The lighting apparatus according to Claim 17,
wherein an additive for diffusing light outputted from said plurality of solid state light emitting devices is added to said translucent part.

21. The lighting apparatus according to Claim 17, further comprising
a diffusion sheet which is formed on one of an outer surface and an inner surface of said translucent part and which diffuses light emitted by said plurality of solid state light emitting devices.

22. The lighting apparatus according to one of Claims 1 to 21, further comprising
a joining unit which has adhesiveness and which is located between said casing and said holding unit,
wherein said casing and said holding unit are brought into close contact with each other by said joining unit.

23. The lighting apparatus according to Claim 17,
wherein said joining unit is double-faced tape which does not contain a backing material.

24. The lighting apparatus according to one of Claims 1 to 23,
wherein said plurality of solid state light emitting devices emit light having one of a daylight color, a daylight-white color, a white color, a warm white color, and a light bulb color specified in 4.2 "Chromaticity range" in JISZ9112 "Classification of fluorescent lamps by chromaticity and colour rendering property".

25. The lighting apparatus according to one of Claims 1 to 23,
wherein said plurality of solid state light emitting devices emit light having a peak wavelength of 380 to 500 nm.

26. The lighting apparatus according to one of Claims 1 to 25,
wherein said plurality of solid state light emitting devices are light emitting diodes.

27. The lighting apparatus according to one of Claims 1 to 26,
wherein said lighting apparatus has dimensions same as dimensions of any of the double-capped fluorescent lamps specified in 2.3.1 "List of Data Sheets" of JISC7617-2 "Double-capped fluorescent lamps - Part 2: Performance specifications".
